(19) Europäisches Patentamt
European Patent Office
Office européen des brevets

(11) **EP 4 641 509 A1**

(12) **EUROPEAN PATENT APPLICATION**
published in accordance with Art. 153(4) EPC

(43) Date of publication:
**29.10.2025 Bulletin 2025/44**

(51) International Patent Classification (IPC):
***G06T 17/20*** (2006.01)

(21) Application number: 24813846.3

(22) Date of filing: **22.03.2024**

(52) Cooperative Patent Classification (CPC):
**G06T 5/77; G06T 7/66; G06T 17/20; G06T 19/20**

(86) International application number:
**PCT/CN2024/083202**

(87) International publication number:
**WO 2024/244640 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.05.2023 CN 202310626315**

(71) Applicant: **Tencent Technology (Shenzhen) Company Limited**
**Shenzhen, Guangdong 518057 (CN)**

(72) Inventors:
• **CAI, Zhigang**
  **Shenzhen, Guangdong 518057 (CN)**
• **LI, Yuanheng**
  **Shenzhen, Guangdong 518057 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **MODEL SEAM REPAIRING METHOD AND APPARATUS, AND DEVICE AND MEDIUM**

(57) Disclosed is a method of repairing a model seam, performed by a computer device and including: determining sampled texels obtained by sampling texels of an initial three-dimensional mesh model in a three-dimensional virtual scene, and for each of the sampled texels, constructing a ray emission region, such that a plane in which the ray emission region is located is perpendicular to a normal direction of the sampled texel (202); obtaining at least one ray by determining a ray starting point in the ray emission region and a ray direction opposite to the normal direction of the sampled texel, and determining at least one candidate texel in the initial three-dimensional mesh model that intersects one of the at least one ray (204); if at least one texel of the at least one candidate texel is spatially adjacent to the sampled texel, determining the sampled texel as a first seam texel (206); determining, from the at least one texel spatially adjacent to the sampled texel, a second seam texel spatially adjacent to the first seam texel (208); and adjusting the first seam texel and the second seam texel in the initial three-dimensional mesh model, to obtain a repaired target three-dimensional mesh model (210).

FIG. 2

## Description

### RELATED APPLICATION

This application claims priority to Chinese Patent Application No. 2023106263156, entitled "MODEL SEAM REPAIRING METHOD AND APPARATUS, DEVICE, AND MEDIUM" and filed on May 30, 2023, which is incorporated herein by reference in its entirety.

### FIELD OF THE TECHNOLOGY

This application relates to the field of illumination rendering technologies, and in particular, to a model seam repairing method and apparatus, a device, and a medium.

### BACKGROUND OF THE DISCLOSURE

A baking system may perform preliminary illumination calculation on illumination received by virtual objects in a three-dimensional virtual scene, and illumination data generated by the calculation is stored in a two-dimensional illumination map. In a scene with a fixed light source, replacing real-time illumination calculation with an illumination map may reduce resource consumption, thereby improving scene operation efficiency. For example, for a game field, when a virtual object model in a game scene is rendered, real-time illumination calculation may be replaced with an illumination map, thereby improving model rendering efficiency. However, continuous texels in a three-dimensional mesh model may not correspond to continuous positions in the illumination map. Illumination data corresponding to the texels at discontinuous positions in the illumination map differ greatly, thereby leading to a seam effect on a model obtained by illumination rendering based on the illumination map.

In the conventional art, texels that may cause seams in a model may be found in a manner of traversing model vertices one by one, leading to low search efficiency of seam texels, and the problem of low search efficiency of seam texels is particularly prominent for open large-world scenes, thereby resulting in low efficiency in seam repair for the model.

### SUMMARY

This application provides a model seam repairing method and apparatus, a device, and a medium.

According to a first aspect, this application provides a model seam repairing method, including:

determining sampled texels obtained by sampling texels of an initial three-dimensional mesh model in a three-dimensional virtual scene, and for each of the sampled texels, constructing a ray emission region, such that a plane in which the ray emission region is located is perpendicular to a normal direction of the sampled texel;

obtaining at least one ray by determining a ray starting point in the ray emission region and a ray direction opposite to the normal direction of the sampled texel, and determining at least one candidate texel in the initial three-dimensional mesh model that intersects one of the at least one ray;

if at least one texel of the at least one candidate texel is spatially adjacent to the sampled texel, determining the sampled texel as a first seam texel;

determining, from the at least one texel spatially adjacent to the sampled texel, a second seam texel spatially adjacent to the first seam texel; and

adjusting the first seam texel and the second seam texel in the initial three-dimensional mesh model, to obtain a repaired target three-dimensional mesh model.

According to a second aspect, this application provides a model seam repairing apparatus, including:

a construction module, configured to determine sampled texels obtained by sampling texels of an initial three-dimensional mesh model in a three-dimensional virtual scene, and for each of the sampled texels, constructing a ray emission region, such that a plane in which the ray emission region is located is perpendicular to a normal direction of the sampled texel;

a determination module, configured to obtain at least one ray by determining a ray starting point in the ray emission region and a ray direction opposite to the normal direction of the sampled texel, and determining at least one candidate texel in the initial three-dimensional mesh model that intersects one of the at least one ray;

a judgment module, configured to determine, if at least one texel of the at least one candidate texel is spatially adjacent to the sampled texel, determine the sampled texel as a first seam texel;

the determination module being further configured to determine, from the at least one texel spatially adjacent to the sampled texel, a second seam texel spatially adjacent to the first seam texel; and

a repair module, configured to adjust the first seam texel and the second seam texel in the initial three-dimensional mesh model, to obtain a repaired target three-dimensional mesh model.

According to a third aspect, this application provides a computer device, including a memory and a processor, the memory having a computer program stored therein, and the processor, when executing the computer program, implementing operations in the method embodiments of this application.

According to a fourth aspect, this application provides a computer-readable storage medium, having a computer program stored therein, when the computer program is executed by a processor, operations in the method embodiments of this application being implemented.

According to a fifth aspect, this application provides a computer program product, including a computer program, when the computer program is executed by a processor, operations in the method embodiments of this application being implemented.

Details of one or more embodiments of this application are set forth in the accompanying drawings and descriptions below. Other features, objectives, and advantages of this application become apparent from the specification, the drawings, and the claims.

BRIEF DESCRIPTION OF THE DRAWINGS

To describe the technical solutions in the embodiments of this application or the conventional technology more clearly, the following briefly describes the accompanying drawings required for describing the embodiments or the conventional technology. Apparently, the accompanying drawings in the following descriptions are merely embodiments of this application, and a person of ordinary skill in the art may still derive other accompanying drawings from the disclosed accompanying drawings without creative efforts.

FIG. 1 is a diagram of an application environment of a model seam repairing method according to an embodiment.

FIG. 2 is a schematic flowchart of a model seam repairing method according to an embodiment.

FIG. 3 is a schematic diagram of construction of a ray emission region according to an embodiment.

FIG. 4 is a schematic diagram of a process of searching for a first seam texel and a second seam texel according to an embodiment.

FIG. 5 is a schematic diagram of a process of determining a denoising reference region corresponding to a to-be-repaired seam texel according to an embodiment.

FIG. 6 is a schematic diagram of a process of determining a denoising reference region corresponding to a to-be-repaired seam texel according to another embodiment.

FIG. 7 is a schematic diagram of a parameter configuration interface for model seam repair according to an embodiment.

FIG. 8 is a schematic diagram showing comparisons before and after seam repair for a single model according to an embodiment.

FIG. 9 is a schematic diagram showing comparisons before and after seam repair for a plurality of models according to an embodiment.

FIG. 10 is a schematic flowchart of a model seam repairing method according to another embodiment.

FIG. 11 is a structural block diagram of a model seam repairing apparatus according to an embodiment.

FIG. 12 is a diagram of an internal structure of a computer device according to an embodiment.

FIG. 13 is a diagram of an internal structure of a computer device according to another embodiment.

DESCRIPTION OF EMBODIMENTS

The technical solutions in the embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

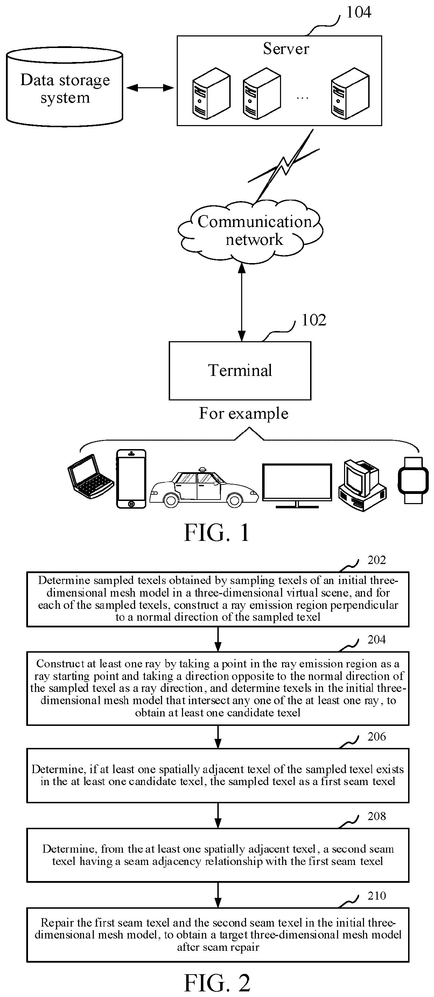

A model seam repairing method provided in this application may be applied to an application environment shown in FIG. 1. A terminal 102 communicates with a server 104 by using a network. A data storage system may be disposed separately to store data that the server 104 needs to process. The data storage system may be integrated on the server 104, or may be placed on a cloud or another server. The terminal 102 may be, but is not limited to, various desktop computers, notebook computers, smart phones, tablet computers, Internet of Things devices, and portable wearable devices. The Internet of Things devices may be smart speakers, smart televisions, smart air conditioners, smart vehicle-mounted devices, or the like. The portable wearable devices may be smart watches, smart bands, head-mounted devices, or the like. The server 104 may be an independent physical server, or may be a server cluster including a plurality of physical servers or a distributed system, or may be a cloud server providing basic cloud computing services, such as a cloud service, a cloud database, cloud computing, a cloud function, cloud storage, a network service, cloud communication, a middleware service, a domain name service, network security services such as cloud security, host security, a content delivery network (CDN), big data, and an artificial intelligence platform. The terminal 102 and the server 104 may be directly or indirectly connected in a wired or wireless communication manner, which is not limited in this application.

For each sampled texel in an initial three-dimensional mesh model in a three-dimensional virtual scene, the server 104 may construct a ray emission region perpendicular to a normal direction of the sampled texel, construct at least one ray by taking a point in the ray emission region as a ray starting point and taking a direction opposite to the normal direction of the sampled texel as a ray direction, and determine texels in the initial three-dimensional mesh model that intersect any one of the at least one ray, to obtain at least one candidate texel. If at least one spatially adjacent texel of the sampled texel exists in the at least one candidate texel, the server 104 may determine the sampled texel as a first seam texel; and determine, from the at least one spatially adjacent texel, a second seam texel having a seam adjacency relationship with the first seam texel. The server 104 may repair the first seam texel and the second seam texel in the initial three-dimensional mesh model, to obtain a target three-dimensional mesh model after seam repair.

The server 104 may transmit the target three-dimensional mesh model after seam repair to the terminal 102 for display. This is not limited in this embodiment. The application scene in FIG. 1 is merely for illustration and is not limited thereto.

In an embodiment, as shown in FIG. 2, a model seam repairing method (namely, a method of repairing a model seam) is provided. The method may be applied to a computer device. The computer device may be a terminal or a server. The method may be performed by the terminal or the server alone, or may be implemented through interaction between the terminal and the server. This embodiment is described by using an example in which the method is applied to a computer device, including the following operations:

Operation 202: Determine sampled texels obtained by sampling texels of an initial three-dimensional mesh model in a three-dimensional virtual scene, and for each of the sampled texels, constructing a ray emission region, such that a plane in which the ray emission region is located is perpendicular to a normal direction of the sampled texel; in embodiments of the present application, operation 202 can also include following operations: Determine sampled texels obtained by sampling texels of an initial three-dimensional mesh model in a three-dimensional virtual scene, and for each of the sampled texels, constructing a ray emission region perpendicular to a normal direction of the sampled texel.

The three-dimensional virtual scene is a virtual scene in a three-dimensional space. For example, the three-dimensional virtual scene may include at least one of a game scene, a film and television special effects scene, a visual design scene, a virtual reality (VR) scene, an industrial simulation scene, and a digital cultural and creative scene. The three-dimensional mesh model is a mesh model in the three-dimensional virtual scene. The mesh model is a virtual model including at least one mesh patch. The mesh patch is a unit patch in a tessellated mesh model. The mesh patch may be a patch in a polygonal shape. For example, the mesh patch may be a triangular mesh patch or a quadrilateral mesh patch, which is not limited in this embodiment. The initial three-dimensional mesh model is a three-dimensional mesh model before seam repair. The initial three-dimensional mesh model is a to-be-repaired three-dimensional mesh model. There may be seams on the initial three-dimensional mesh model. In this case, rendering quality of the initial three-dimensional mesh model is low. The sampled texel is a texel sampled from the initial three-dimensional mesh model. The normal direction of the sampled texel is a direction of a normal vector of the sampled texel. The ray emission region is a region configured for emitting a ray and in the three-dimensional virtual scene. The ray emission region may be a region constructed by moving by a preset distance from the sampled texel along a direction of the normal vector of the sampled texel. A plane where the ray emission region is located is perpendicular to the direction of the normal vector of the sampled texel.

Specifically, the three-dimensional virtual scene includes at least one initial three-dimensional mesh model, the initial three-dimensional mesh model includes at least one mesh patch, and each mesh patch includes a plurality of texels. The computer device may sample texels in the initial three-dimensional mesh model, to obtain sampled texels. For each sampled texel, the computer device may move by a preset distance along the direction of the normal vector of the sampled texel, and construct, at a position at a preset distance from the sampled texel, the ray emission region perpendicular to the normal direction of the sampled texel.

In an embodiment, the initial three-dimensional mesh model includes at least one mesh patch including a plurality of edges, and each mesh patch includes a plurality of texels. The computer device may sample texels on the edges in the mesh patch of the initial three-dimensional mesh model, to obtain the sampled texels. Since a process of obtaining a planar mesh model by performing two-dimensional flattening on the initial three-dimensional mesh model is performed based on mesh vertices in the mesh patch, texels that are continuous in the three-dimensional virtual scene but discontinuous in an illumination map corresponding to the initial three-dimensional mesh model are all located on edges of the mesh patch. The illumination map may be obtained by recording illumination data generated by illumination calculation for texels in the planar mesh model. The texels on the edges in the mesh patch of the initial three-dimensional mesh model are sampled to obtain the sampled texels, and a subsequent seam texel search is performed based on the sampled texels, which can further improve accuracy of the seam texel search.

In an embodiment, the computer device may randomly sample the texels in the initial three-dimensional mesh model, to obtain the sampled texels.

In an embodiment, for each sampled texel, the computer device may take a texel radius of the sampled texel as a preset distance, take the texel radius of the sampled texel as a moving distance, and move along the direction of the normal vector of the sampled texel. The movement is stopped when the moving distance reaches a distance corresponding to the texel radius of the sampled texel. The computer device may perform diffusion around in a tangent space corresponding to the sampled texel by taking the sampled texel as a center point at a position where the movement is stopped, to construct the ray emission region perpendicular to the normal direction of the sampled texel.

In an embodiment, for each sampled texel, the computer device may perform diffusion around in the tangent space corresponding to the sampled texel by taking the sampled texel as a center point and taking the texel radius of the sampled texel as an offset at the position where the movement is stopped, to construct the ray emission region perpendicular to the normal direction of the sampled texel.

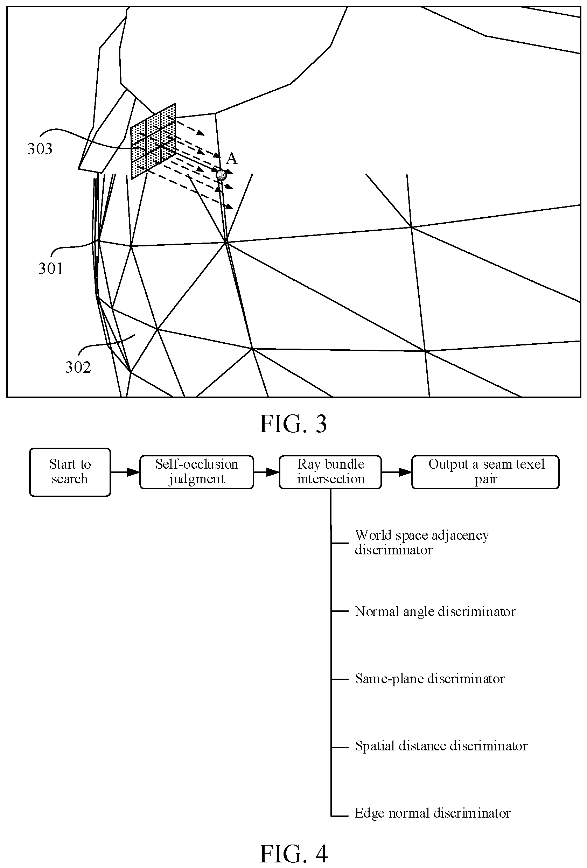

In an embodiment, as shown in FIG. 3, the three-dimensional virtual scene includes at least one initial three-dimensional mesh model 301, and the initial three-dimensional mesh model 301 includes at least one mesh patch 302. In this embodiment, the mesh patch 302 is a triangular mesh patch. For each sampled texel A in the initial three-dimensional mesh model 301, the computer device may move by a preset distance from the sampled texel A along a direction of a normal vector of the sampled texel A, and construct, at a position at a preset distance from the sampled texel A, a ray emission region 303 perpendicular to a normal direction of the sampled texel A.

Operation 204: Obtain at least one ray by determining a ray starting point in the ray emission region and a ray direction opposite to the normal direction of the sampled texel, and determine at least one candidate texel in the initial three-dimensional mesh model that intersects one of the at least one ray; in embodiments of the present application, operation 204 can also include following operations: construct at least one ray by taking a point in the ray emission region as a ray starting point and taking a direction opposite to the normal direction of the sampled texel as a ray direction, and determine texels in the initial three-dimensional mesh model that intersect any one of the at least one ray, to obtain at least one candidate texel.

Specifically, the ray emission region includes a plurality of points, and the computer device may construct at least one ray by taking a point in the ray emission region and meeting a target condition as a ray starting point and taking a direction opposite to the normal direction of the sampled texel as a ray direction. Then, the computer device may determine at least one texel in the initial three-dimensional mesh model and respectively intersecting the rays, to obtain at least one candidate texel.

In an embodiment, the computer device may determine texels in the initial three-dimensional mesh model that intersect any one of the at least one ray, to obtain intersecting texels, and directly take the obtained intersecting texels as candidate texels. The intersecting texels are texels in the initial three-dimensional mesh model that intersect any one of the at least one ray.

In an embodiment, the computer device may select at least one candidate texel from the intersecting texels. For example, the computer device may randomly select at least one candidate texel from the intersecting texels.

In an embodiment, still referring to FIG. 3, the computer device may construct at least one ray by taking a point in the ray emission region 303 and meeting a target condition as a ray starting point and taking a direction opposite to the normal direction of the sampled texel A as a ray direction. Then, the computer device may determine at least one texel in the initial three-dimensional mesh model 301 and respectively intersecting the rays, to obtain at least one candidate texel.

Operations 206: if at least one texel of the at least one candidate texel is spatially adjacent to the sampled texel, determining the sampled texel as a first seam texel; in embodiments of the present application, operation 206: determine, if at least one spatially adjacent texel of the sampled texel exists in the at least one candidate texel, the sampled texel as a first seam texel.

The spatially adjacent texel of the sampled texel is a texel adjacent to the sampled texel in the three-dimensional virtual scene. The three-dimensional virtual scene is located in a three-dimensional world space. Therefore, the texel adjacent to the sampled texel in the three-dimensional virtual scene is a texel adjacent to the sampled texel in the world space. A seam texel is a texel causing a seam effect on the initial three-dimensional mesh model. In a case that the sampled texel has at least one spatially adjacent texel, the sampled texel may be determined as a seam texel, to obtain the first seam texel. In a case that the sampled texel has at least one spatially adjacent texel, the sampled texel may be directly determined as the first seam texel.

Specifically, for each candidate texel, the computer device may determine whether the candidate texel is adjacent to the sampled texel in the three-dimensional virtual scene, thereby determining whether the candidate texel belongs to a spatially adjacent texel of the sampled texel. If at least one spatially adjacent texel of the sampled texel exists in the candidate texels, the computer device may determine the sampled texel as the first seam texel.

In an embodiment, for each candidate texel, the computer device may determine a distance between the candidate texel and the sampled texel in the three-dimensional virtual scene, to obtain a spatial distance corresponding to the candidate texel. If there is a candidate texel whose spatial distance is less than a preset spatial distance, a spatially adjacent texel of the sampled texel exists in the candidate texels, and the computer device may determine the sampled texel as the first seam texel. The computer device may take the candidate texel whose spatial distance is less than the preset spatial distance as the spatially adjacent texel of the sampled texel.

Operation 208: Determine, from the at least one texel spatially adjacent to the sampled texel, a second seam texel spatially adjacent to the first seam texel; in embodiments of the present application, operation 208 can also include following operations: determine, from the at least one spatially adjacent texel, a second seam texel having a seam adjacency relationship with (i.e., spatially adjacent to) the first seam texel.

The second seam texel is a spatially adjacent texel having the seam adjacency relationship with the first seam texel. There is a seam adjacency relationship between the first seam texel and the second seam texel. The first seam texel and the second seam texel may form a texel pair, and the texel pair may cause a seam effect on the initial three-dimensional mesh model. The first seam texel and the second seam texel in the texel pair are respectively located on two sides of a seam of the initial three-dimensional mesh model.

In an embodiment, the computer device may randomly select, from the at least one spatially adjacent texel, one spatially adjacent texel as the second seam texel having the seam adjacency relationship with the first seam texel.

Operations 210: Adjust the first seam texel and the second seam texel in the initial three-dimensional mesh model, to obtain a repaired target three-dimensional mesh model; in embodiments of the present application, operation 210 can also include following operations: Repair the first seam texel and the second seam texel in the initial three-dimensional mesh model, to obtain a target three-dimensional mesh model after seam repair.

The target three-dimensional mesh model is a three-dimensional mesh model obtained after seam repair on the initial three-dimensional mesh model. There is a seam effect on the initial three-dimensional mesh model, leading to lower model rendering quality. After seam repair on the initial three-dimensional mesh model, a target three-dimensional mesh model without seam effects may be obtained, thereby improving the model rendering quality.

Specifically, the computer device may acquire illumination data recorded for the first seam texel in the initial three-dimensional mesh model and acquire illumination data recorded for the second seam texel in the initial three-dimensional mesh model. A difference between the illumination data recorded for the first seam texel and the illumination data recorded for the second seam texel is large, resulting in a seam effect on the initial three-dimensional mesh model. Therefore, the computer device may denoise the illumination data recorded for the first seam texel and the illumination data recorded for the second seam texel and reduce the difference between the illumination data recorded for the first seam texel and the illumination data recorded for the second seam texel, thereby repairing the first seam texel and the second seam texel to obtain the target three-dimensional mesh model after seam repair. The illumination data is data that describes illumination, which may describe a color and intensity of illumination. Correspondingly, the illumination data may include a color value and a brightness value. An illumination difference may include a color value difference and a brightness value difference.

In an embodiment, the computer device may determine a texel in the initial three-dimensional mesh model and adjacent to the first seam texel and determine a texel in the initial three-dimensional mesh model and adjacent to the second seam texel. The computer device may acquire illumination data recorded for the texel adjacent to the first seam texel and acquire illumination data recorded for the texel adjacent to the second seam texel. Then, the computer device may denoise the illumination data recorded for the first seam texel with reference to the illumination data recorded for the texel adjacent to the first seam texel and denoise the illumination data recorded for the second seam texel with reference to the illumination data recorded for the texel adjacent to the second seam texel, thereby repairing the first seam texel and the second seam texel to obtain the target three-dimensional mesh model after seam repair.

In the above model seam repairing method, for each sampled texel in an initial three-dimensional mesh model in a three-dimensional virtual scene, a ray emission region perpendicular to a normal direction of the sampled texel is constructed, at least one ray is constructed by taking a point in the ray emission region as a ray starting point and taking a direction opposite to the normal direction of the sampled texel as a ray direction, and texels in the initial three-dimensional mesh model that intersect any one of the at least one ray are determined, to obtain at least one candidate texel. If at least one spatially adjacent texel of the sampled texel exists in the at least one candidate texel, the sampled texel may be quickly determined as a first seam texel. A second seam texel having a seam adjacency relationship with the first seam texel may be quickly determined from the at least one spatially adjacent texel. Then, the first seam texel and the second seam texel in the initial three-dimensional mesh model are quickly repaired, to obtain a target three-dimensional mesh model after seam repair. Compared with the conventional manner of traversing model vertices one by one to search for seam texels, in the seam searching manner in this application, there is no need to traverse model vertices to search for seam texels; instead, a ray emission region is constructed and rays are generated by the ray emission region to intersect with the initial three-dimensional mesh model to search for the seam texels, which improves search efficiency of model seam texels. Then, the first seam texel and the second seam texel quickly found are repaired, which can improve model seam repair efficiency.

In an embodiment, the determining sampled texels obtained by sampling texels of an initial three-dimensional mesh model in a three-dimensional virtual scene includes: for each of the texels in the initial three-dimensional mesh model, ignoring, in the three-dimensional virtual scene, the texel if an occlusion mesh patch exists within a preset range along a normal direction of the texel from the texel; the occlusion mesh patch being a mesh patch in the initial three-dimensional mesh model other than a mesh patch where the texel is located; and taking the texels not ignored in the initial three-dimensional mesh model as the sampled texels.

Texel is the abbreviation of texture element, which is a basic unit in a computer graphics texture space. Textures are represented by arrangements of texels. For each texel in the initial three-dimensional mesh model, an occlusion mesh patch corresponding to the texel is a mesh patch in the initial three-dimensional mesh model other than a mesh patch where the texel is located and occluding illumination of the texel.

Specifically, for each texel in the initial three-dimensional mesh model, in the three-dimensional virtual scene, if the occlusion mesh patch exists within the preset range along the normal direction of the texel from the texel, illumination of the texel may be occluded by the occlusion mesh patch, and illumination data corresponding to the occluded texel is also quite different from illumination data corresponding to an adjacent texel thereof. In this case, the computer device may ignore the occluded texel. Moreover, the texels not ignored in the initial three-dimensional mesh model are taken as the sampled texels. "The computer device ignores the occluded texel" means that the computer device may automatically skip these obscured texels when sampling the texels in the initial three-dimensional mesh model. That is, the computer device may not sample the occluded texels.

In an embodiment, the preset range is determined by using a texel radius of the texel. For example, the preset range is a range corresponding to the texel radius of the texel. For each texel in the initial three-dimensional mesh model, in the three-dimensional virtual scene, the texel is ignored if an occlusion mesh patch exists within a texel radius along the normal direction of the texel. In this way, since a length of the texel radius of the texel may represent a size of a region covered by the texel in the initial three-dimensional mesh model, accuracy of the seam texel search can be further improved by ignoring a texel that has an occlusion mesh patch within a texel radius.

In the above embodiments, for each texel in the initial three-dimensional mesh model, whether occlusion mesh patches exist around the mesh patch where the texel is located is determined, and if the occlusion mesh patches exist, the texel is occluded by the occlusion mesh patches therearound. The illumination data corresponding to the occluded texel is also quite different from the illumination data corresponding to the adjacent texel thereof. Therefore, non-occluded texels in the initial three-dimensional mesh model are taken as sampled texels for a subsequent seam texel search, which can improve accuracy of the seam texel search.

In an embodiment, the determining texels in the initial three-dimensional mesh model that intersect any one of the at least one ray, to obtain at least one candidate texel includes: determining the texels in the initial three-dimensional mesh model that intersect any one of the at least one ray, to obtain intersecting texels; and for each of the intersecting texels, taking the intersecting texel as a candidate texel if coordinates of the intersecting texel in a planar mesh model are discontinuous with coordinates of the sampled texel in the planar mesh model or the intersecting texel and the sampled texel are located in different initial three-dimensional mesh models; where the planar mesh model is a mesh model after two-dimensional flattening on the initial three-dimensional mesh model.

The intersecting texels are texels in the initial three-dimensional mesh model that intersect the rays. The planar mesh model is a mesh model after two-dimensional flattening on the initial three-dimensional mesh model. The planar mesh model is a mesh model in a two-dimensional space.

Specifically, the computer device may take the texels in the initial three-dimensional mesh model that intersect the rays as intersecting texels. A quantity of the intersecting texels is at least one. The computer device may unfold the initial three-dimensional mesh model in the two-dimensional space to obtain the planar mesh model after two-dimensional flattening on the initial three-dimensional mesh model. The texels in the initial three-dimensional mesh model have a mapping relationship with texels in the planar mesh model. For each intersecting texel, the computer device may acquire coordinates of the intersecting texel in the planar mesh model and acquire coordinates of the sampled texel in the planar mesh model. In the initial three-dimensional mesh model, a quantity of the initial three-dimensional mesh model is at least one. If the coordinates of the intersecting texel in the planar mesh model are discontinuous with the coordinates of the sampled texel in the planar mesh model or the intersecting texel and the sampled texel are located in different initial three-dimensional mesh models, the intersecting texel is a potential seam texel. That is, the intersecting texel may be a texel that causes a seam in the model. The computer device may take the intersecting texel as a candidate texel.

In the above embodiments, for each intersecting texel, if the coordinates of the intersecting texel in the planar mesh model are discontinuous with the coordinates of the sampled texel in the planar mesh model or the intersecting texel and the sampled texel are located in different initial three-dimensional mesh models, the intersecting texel is a potential seam texel. That is, the intersecting texel may be a texel that causes a seam in the model. The potential seam texels preliminarily screened out are used as candidate texels, and then true seam texels are filtered out in an advanced manner from the candidate texels obtained through preliminary screening, which can further improve the efficiency of the seam texel search.

In an embodiment, the method further includes: for each candidate texel, determining the candidate texel as a spatially adjacent texel of the sampled texel if a first mesh patch corresponding to the candidate texel and a second mesh patch corresponding to the sampled texel are continuous in the three-dimensional virtual scene; where the first mesh patch is a mesh patch where the candidate texel is located in the initial three-dimensional mesh model; and the second mesh patch is a mesh patch where the sampled texel is located in the initial three-dimensional mesh model.

Specifically, for each candidate texel, the computer device may determine whether the first mesh patch where the candidate texel is located and the second mesh patch where the sampled texel is located are continuous in the three-dimensional virtual scene. The computer device may determine the candidate texel as a spatially adjacent texel of the sampled texel if the first mesh patch corresponding to the candidate texel and the second mesh patch corresponding to the sampled texel are continuous in the three-dimensional virtual scene.

In an embodiment, the computer device may determine new candidate texels by iteratively reducing the ray emission region, and then determine the spatially adjacent texel of the sampled texel from the new candidate texels.

In an embodiment, the computer device may decrement an offset used in the construction of the ray emission region at a rate of half of the texel radius of the sampled texel, to determine the spatially adjacent texel of the sampled texel. Specifically, for each sampled texel, the computer device may take the sampled texel as a center point, take half of an offset corresponding to a previous round as an offset of this round, and perform diffusion around in the tangent space corresponding to the sampled texel according to the offset corresponding to this round, to construct a ray emission region perpendicular to the normal direction of the sampled texel and corresponding to this round. An area of the ray emission region corresponding to this round is smaller than an area of a ray emission region corresponding to the previous round. When a texel intersecting the sampled texel exists in candidate texels obtained based on a ray emission region newly constructed in this round, candidate texels obtained based on a ray emission region newly constructed in the previous round are taken as spatially adjacent texels of the sampled texel.

In an embodiment, the mesh patch includes a plurality of mesh vertices, and if at least one identical mesh vertex exists in the first mesh patch where the candidate texel is located and the second mesh patch where the sampled texel is located, the computer device may determine whether the first mesh patch and the second mesh patch are continuous in the three-dimensional virtual scene.

In the above embodiments, for each candidate texel, since the mesh patches where two texels continuous in the three-dimensional virtual scene are respectively located are definitely continuous in the three-dimensional virtual scene, whether the first mesh patch corresponding to the candidate texel and the second mesh patch corresponding to the sampled texel are continuous in the three-dimensional virtual scene is determined, thereby determining, based on a judgment result, whether the candidate texel is a spatially adjacent texel of the sampled texel, which can improve accuracy of judgment of the spatially adjacent texel.

In an embodiment, the determining, from the at least one spatially adjacent texel, a second seam texel having a seam adjacency relationship with the first seam texel includes: selecting, from the at least one spatially adjacent texel according to at least one of an illumination difference between illumination data of the spatially adjacent texel and illumination data of the first seam texel, a plane difference between a mesh patch where the spatially adjacent texel is located and a mesh patch where the first seam texel is located, a spatial distance between the spatially adjacent texel and the first seam texel in the three-dimensional virtual scene, and an intersection area between a coverage region of the spatially adjacent texel in the initial three-dimensional mesh model and a coverage region of the first seam texel in the initial three-dimensional mesh model, the spatially adjacent texel meeting a target condition; and determining the second seam texel from the selected spatially adjacent texel.

Data according to which the spatially adjacent texel meeting the target condition is specifically selected from the at least one spatially adjacent texel may be pre-specified, which may specifically be specified in a configuration file or hardened in algorithm code, thereby selecting, from the at least one spatially adjacent texel according to at least one of the illumination difference, the plane difference, the spatial distance, and the intersection area based on hardening logic in the configuration file or algorithm code, the spatially adjacent texel meeting the target condition; and the second seam texel is determined from the selected spatially adjacent texel.

Specifically, the computer device may select, from the at least one spatially adjacent texel according to at least one of the illumination difference between illumination data of the spatially adjacent texel and illumination data of the first seam texel, the plane difference between the mesh patch where the spatially adjacent texel is located and the mesh patch where the first seam texel is located, i.e., whether the mesh patch where the spatially adjacent texel is located and the mesh patch where the first seam texel is located are on the same plane, a spatial distance between a position of the spatially adjacent texel in the three-dimensional virtual scene and a position of the first seam texel in the three-dimensional virtual scene, and the intersection area between the coverage region of the spatially adjacent texel in the initial three-dimensional mesh model and the coverage region of the first seam texel in the initial three-dimensional mesh model, the spatially adjacent texel meeting the target condition. Then, the computer device may determine the second seam texel from the selected spatially adjacent texel.

In an embodiment, firstly, the computer device may select, from the at least one spatially adjacent texel according to the illumination difference between the illumination data of the spatially adjacent texel and the illumination data of the first seam texel, the spatially adjacent texel meeting the target condition. Then, the computer device may select, from the spatially adjacent texel selected based on the illumination difference, the spatially adjacent texel meeting the target condition according to the plane difference between the mesh patch where the spatially adjacent texel is located and the mesh patch where the first seam texel is located. Further, the computer device may select, from the spatially adjacent texel selected based on the plane difference, the spatially adjacent texel meeting the target condition according to the spatial distance between the spatially adjacent texel and the first seam texel in the three-dimensional virtual scene. Finally, the computer device may select, from the spatially adjacent texel selected based on the spatial distance, one spatially adjacent texel as the second seam texel according to the intersection area between the coverage region of the spatially adjacent texel in the initial three-dimensional mesh model and the coverage region of the first seam texel in the initial three-dimensional mesh model.

In the above embodiments, the spatially adjacent texel meeting the target condition is selected from the at least one spatially adjacent texel in at least one screening manner of the illumination difference, the plane difference, the spatial distance, and the intersection area, which can improve accuracy of screening of some spatially adjacent texels. Then, the second seam texel is determined from more accurate selected spatially adjacent texels, which can improve accuracy of screening of the second seam texel.

In an embodiment, the selecting, from the at least one spatially adjacent texel, the spatially adjacent texel meeting a target condition includes: in a case that the at least one spatially adjacent texel is screened according to the illumination difference between the illumination data of the spatially adjacent texel and the illumination data of the first seam texel, for each of the at least one spatially adjacent texel, determining a normal angle between the mesh patches corresponding to the spatially adjacent texel and the first seam texel, to obtain a first angle corresponding to the spatially adjacent texel; the first angle being positively correlated with the illumination difference; and selecting, from the at least one spatially adjacent texel, the spatially adjacent texel with the first angle less than or equal to a preset angle.

The normal angle is an angle between a normal of the mesh patch corresponding to the spatially adjacent texel and a normal of the mesh patch corresponding to the first seam texel. The first angle is the normal angle between the mesh patches corresponding to the spatially adjacent texel and the first seam texel. "The first angle being positively correlated with the illumination difference" may be understood as that a larger first angle indicates a larger illumination difference between the illumination data of the spatially adjacent texel and the illumination data of the first seam texel. A smaller first angle indicates a smaller illumination difference between the illumination data of the spatially adjacent texel and the illumination data of the first seam texel.

In an embodiment, in a case that the at least one spatially adjacent texel is screened according to the illumination difference between the illumination data of the spatially adjacent texel and the illumination data of the first seam texel, for each spatially adjacent texel, the computer device may determine a normal angle between the normal of the mesh patch corresponding to the spatially adjacent texel and the normal of the mesh patch corresponding to the first seam texel, and take the normal angle as the first angle corresponding to the spatially adjacent texel. The first angle is positively correlated with the illumination difference. Then, the computer device may select, from the at least one spatially adjacent texel, the spatially adjacent texel with the first angle less than or equal to a preset angle. The computer device may select, from the at least one spatially adjacent texel, a spatially adjacent texel with a smaller illumination difference.

In the above embodiments, in a case that the spatially adjacent texel meeting the target condition is selected according to the illumination difference, since the first angle is positively correlated with the illumination difference, the spatially adjacent texel with the first angle less than or equal to the preset angle is selected by using the first angle between the normals corresponding to the mesh patches, which can select the spatially adjacent texel with the smaller illumination difference, thereby improving search accuracy of the second seam texel.

In an embodiment, the selecting, from the at least one spatially adjacent texel, the spatially adjacent texel meeting a target condition includes: in a case that the at least one spatially adjacent texel is screened according to the plane difference between the mesh patch where the spatially adjacent texel is located and the mesh patch where the first seam texel is located, selecting, from the at least one spatially adjacent texel, a spatially adjacent texel having a patch coplanarity relationship with the first seam texel; where a mesh patch corresponding to the selected spatially adjacent texel and the mesh patch corresponding to the first seam texel are on the same plane.

The patch coplanarity relationship means that mesh patches where two seam texels are located are on the same plane. Spatially adjacent texels that are not in an overlapping relationship may be screened out by selecting, from the at least one spatially adjacent texel, the spatially adjacent texel having the patch coplanarity relationship with the first seam texel. For example, a situation where an accessory such as a belt floats above a surface of clothing and is mistaken for a seam can be prevented.

Specifically, in a case that the at least one spatially adjacent texel is screened according to the plane difference between the mesh patch where the spatially adjacent texel is located and the mesh patch where the first seam texel is located, the computer device may determine whether each spatially adjacent texel has the patch coplanarity relationship with the first seam texel, i.e., determine whether the mesh patch where the spatially adjacent texel is located and the mesh patch where the first seam texel is located are on the same plane. Then, the computer device may select, from the at least one spatially adjacent texel, the spatially adjacent texel having the patch coplanarity relationship with the first seam texel. A mesh patch corresponding to the spatially adjacent texel selected based on the plane difference and the mesh patch corresponding to the first seam texel are on the same plane.

In an embodiment, for each spatially adjacent texel, the computer device may project a vector between the spatially adjacent texel and the first seam texel onto the normal of the mesh patch corresponding to the first seam texel, to obtain a projection line segment corresponding to the spatially adjacent texel. Then, the computer device may determine a spatially adjacent texel corresponding to a projection line segment whose length is less than or equal to a preset length as the spatially adjacent texel having the patch coplanarity relationship with the first seam texel.

In the above embodiments, in a case that the spatially adjacent texel meeting the target condition is selected according to the plane difference, the spatially adjacent texel having the patch coplanarity relationship with the first seam texel definitely has no overlapping relationship with the first seam texel. Therefore, spatially adjacent texels that are not in an overlapping relationship can be screened out by selecting, from the at least one spatially adjacent texel, the spatially adjacent texel having the patch coplanarity relationship with the first seam texel, thereby improving search accuracy of the second seam texel.

In an embodiment, the selecting, from the at least one spatially adjacent texel, the spatially adjacent texel meeting a target condition includes: in a case that the at least one spatially adjacent texel is screened according to the spatial distance between the spatially adjacent texel and the first seam texel in the three-dimensional virtual scene, selecting, from the at least one spatially adjacent texel, the spatially adjacent texel with the spatial distance less than or equal to a preset distance; where the preset distance is less than or equal to a texel radius of the first seam texel.

Specifically, in a case that the at least one spatially adjacent texel is screened according to the spatial distance between the spatially adjacent texel and the first seam texel in the three-dimensional virtual scene, the computer device may determine a spatial distance between a position of each spatially adjacent texel in the three-dimensional virtual scene and a position of the first seam texel in the three-dimensional virtual scene. Then, the computer device may select, from the at least one spatially adjacent texel, the spatially adjacent texel with the spatial distance less than or equal to the preset distance.

In the above embodiments, in a case that the spatially adjacent texel meeting the target condition is selected according to the spatial distance, since the spatial distance between two texels is excessively large, regions covered by the two texels are discontinuous in the three-dimensional virtual space. Therefore, spatially adjacent texels whose coverage regions are continuous with the coverage region of the first seam texel in the three-dimensional virtual space can be filtered out by selecting, from the at least one spatially adjacent texel, the spatially adjacent texel with the spatial distance less than or equal to the preset distance, thereby improving search accuracy of the second seam texel.

In an embodiment, the selecting, from the at least one spatially adjacent texel, the spatially adjacent texel meeting a target condition includes: in a case that the at least one spatially adjacent texel is screened according to the intersection area between the coverage region of the spatially adjacent texel in the initial three-dimensional mesh model and the coverage region of the first seam texel in the initial three-dimensional mesh model, for each of the at least one spatially adjacent texel, determining an angle between a texel vector and a reverse edge normal vector corresponding to the first seam texel, to obtain a second angle corresponding to the spatially adjacent texel; the texel vector being a vector pointing from the first seam texel to the spatially adjacent texel; the reverse edge normal vector being opposite to a direction of an edge normal of the first seam texel; and selecting, from the at least one spatially adjacent texel, the spatially adjacent texel with a minimum second angle; where a size of the second angle is negatively correlated with a size of the intersection area.

An edge normal of a texel is a direction vector of a perpendicular line between an edge of the texel and an opposite mesh vertex in a mesh patch. A direction of the edge normal of the texel is from the edge of the texel to the opposite mesh vertex. The edge normal of the first seam texel is a direction vector of a perpendicular line between an edge of the first seam texel and an opposite mesh vertex in the mesh patch.

In an embodiment, in a case that the at least one spatially adjacent texel is screened according to the intersection area between the coverage region of the spatially adjacent texel in the initial three-dimensional mesh model and the coverage region of the first seam texel in the initial three-dimensional mesh model, for each spatially adjacent texel, the computer device may take the vector pointing from the first seam texel to the spatially adjacent texel as the texel vector and the vector opposite to the direction of the edge normal of the first seam texel as the reverse edge normal vector. The computer device may determine the angle between the texel vector and the reverse edge normal vector corresponding to the first seam texel, to obtain the second angle corresponding to the spatially adjacent texel. "A size of the second angle is negatively correlated with a size of the intersection area" means that a smaller second angle indicates a larger intersection area between the coverage region of the spatially adjacent texel in the initial three-dimensional mesh model and the coverage region of the first seam texel in the initial three-dimensional mesh model and a larger second angle indicates a smaller intersection area between the coverage region of the spatially adjacent texel in the initial three-dimensional mesh model and the coverage region of the first seam texel in the initial three-dimensional mesh model. Then, the computer device may select, from the at least one spatially adjacent texel, the spatially adjacent texel with the minimum second angle. The computer device may screen out spatially adjacent texels with a maximum intersection area.

In the above embodiments, in a case that the spatially adjacent texel meeting the target condition is selected according to the intersection area, the size of the second angle is negatively correlated with the size of the intersection area. Therefore, the spatially adjacent texels with the maximum intersection area can be screened out by selecting, from the at least one spatially adjacent texel, the spatially adjacent texel with the minimum second angle, thereby improving search accuracy of the second seam texel.

In an embodiment, as shown in FIG. 4, the computer device may perform self-occlusion judgment on each texel in the initial three-dimensional mesh model. Specifically, for each texel in the initial three-dimensional mesh model, in the three-dimensional virtual scene, the texel is ignored if an occlusion mesh patch exists within a preset range along a normal direction of the texel from the texel, and texels not ignored in the initial three-dimensional mesh model are taken as sampled texels. For each sampled texel in the initial three-dimensional mesh model in the three-dimensional virtual scene, the computer device may construct a ray emission region perpendicular to a normal direction of the sampled texel, construct at least one ray (i.e., a ray bundle) by taking a point in the ray emission region as a ray starting point and taking a direction opposite to the normal direction of the sampled texel as a ray direction, and determine texels in the initial three-dimensional mesh model that intersect any one of the at least one ray, to obtain at least one candidate texel. Whether the sampled texel has a spatially adjacent texel is determined by using a world space adjacency discriminator. If at least one spatially adjacent texel of the sampled texel exists in the at least one candidate texel, the sampled texel is determined as the first seam texel. Then, the computer device may determine, from the spatially adjacent texel, the second seam texel having the seam adjacency relationship with the first seam texel respectively by using a normal angle discriminator, a same-plane discriminator, a spatial distance discriminator and an edge normal discriminator. Specifically, firstly, the computer device may select, by using the normal angle discriminator from the at least one spatially adjacent texel according to the illumination difference between the illumination data of the spatially adjacent texel and the illumination data of the first seam texel, the spatially adjacent texel meeting the target condition. Then, the computer device may select, by using the same-plane discriminator from the spatially adjacent texel selected based on the illumination difference, the spatially adjacent texel meeting the target condition according to the plane difference between the mesh patch where the spatially adjacent texel is located and the mesh patch where the first seam texel is located. Further, the computer device may select, by using the spatial distance discriminator from the spatially adjacent texel selected based on the plane difference, the spatially adjacent texel meeting the target condition according to the spatial distance between the spatially adjacent texel and the first seam texel in the three-dimensional virtual scene. Finally, the computer device may select, by using the edge normal discriminator from the spatially adjacent texel selected based on the spatial distance, one spatially adjacent texel as the second seam texel according to the intersection area between the coverage region of the spatially adjacent texel in the initial three-dimensional mesh model and the coverage region of the first seam texel in the initial three-dimensional mesh model. The first seam texel and the second seam texel may be outputted as a seam texel pair, so as to facilitate subsequent model seam repair based on the outputted seam texel pair.

In an embodiment, the initial three-dimensional mesh model has a corresponding initial illumination map; and the adjusting the first seam texel and the second seam texel in the initial three-dimensional mesh model, to obtain a repaired target three-dimensional mesh model includes: determining, from the initial illumination map, a texel mapped to each of the first seam texel and the second seam texel as a to-be-repaired seam texel; determining, for each of the to-be-repaired seam texels, a denoising reference region corresponding to the to-be-repaired seam texel in the initial illumination map according to the to-be-repaired seam texel and a seam texel having the seam adjacency relationship with the to-be-repaired seam texel in the initial illumination map; determining, according to an angle between an edge normal of each reference texel in the denoising reference region and an edge normal of the to-be-repaired seam texel, an illumination contribution parameter corresponding to the reference texel; denoising and repairing, according to the illumination contribution parameters corresponding to the reference texels and illumination data recorded for the reference texels in the initial illumination map, illumination data recorded for the to-be-repaired seam texel in the initial illumination map, to obtain a target illumination map; and performing illumination rendering on the initial three-dimensional mesh model according to the target illumination map, to obtain the target three-dimensional mesh model after seam repair on the initial three-dimensional mesh model.

The initial illumination map is an illumination map corresponding to the initial three-dimensional mesh model. The initial illumination map is an illumination map before denoising and repairing. Each of the first seam texel and the second seam texel refers to any texel in the first seam texel and the second seam texel. The to-be-repaired seam texel is a to-be-repaired seam texel in the initial illumination map. The denoising reference region is a region used as a reference during the denoising and repairing for the to-be-repaired seam texel. The denoising reference region includes at least one reference texel. The reference texel is a texel used as a reference during the denoising for the to-be-repaired seam texel. The edge normal of the reference texel is a direction vector of a perpendicular line between an edge of the reference texel and an opposite mesh vertex in a mesh patch. A direction of the edge normal of the reference texel is from the edge of the reference texel to the opposite mesh vertex. The edge normal of the to-be-repaired seam texel is a direction vector of a perpendicular line between an edge of the to-be-repaired seam texel and an opposite mesh vertex in a mesh patch. A direction of the edge normal of the to-be-repaired seam texel is from the edge of the to-be-repaired seam texel to the opposite mesh vertex. The illumination contribution parameter is a parameter configured for representing an illumination contribution of the reference texel to the to-be-repaired seam texel. The target illumination map is an illumination map after denoising and repairing.

Specifically, the computer device may determine, from the initial illumination map, a texel mapped to each of the first seam texel and the second seam texel as a to-be-repaired seam texel. Each of the first seam texel and the second seam texel is a seam texel in the initial three-dimensional mesh model in a three-dimensional space, and the to-be-repaired seam texel is a seam texel in an initial illumination map in a two-dimensional space. Each of the first seam texel and the second seam texel in the three-dimensional space has a mapping relationship with the to-be-repaired seam texel in the two-dimensional space. For each to-be-repaired seam texel, the computer device may determine a denoising reference region corresponding to the to-be-repaired seam texel in the initial illumination map according to the to-be-repaired seam texel and a seam texel having the seam adjacency relationship with the to-be-repaired seam texel in the initial illumination map. The first seam texel and the second seam texel are a seam texel pair in the initial three-dimensional mesh model, and the to-be-repaired seam texel and a corresponding seam texel having the seam adjacency relationship therewith are also a seam texel pair in the initial illumination map. The computer device may determine, according to the angle between the edge normal of each reference texel in the denoising reference region and the edge normal of the to-be-repaired seam texel, an illumination contribution parameter of the reference texel for the to-be-repaired seam texel, and denoise and repair, according to the illumination contribution parameters corresponding to the reference texels for the to-be-repaired seam texel and the illumination data recorded for the reference texels in the initial illumination map, the illumination data recorded for the to-be-repaired seam texel in the initial illumination map, to obtain the target illumination map. Then, the computer device may perform illumination rendering on the initial three-dimensional mesh model according to the target illumination map, to obtain the target three-dimensional mesh model after seam repair on the initial three-dimensional mesh model.

In an embodiment, the determining, for each of the to-be-repaired seam texels, a denoising reference region corresponding to the to-be-repaired seam texel in the initial illumination map according to the to-be-repaired seam texel and a seam texel having the seam adjacency relationship with the to-be-repaired seam texel in the initial illumination map includes: determining, for each of the to-be-repaired seam texels, the denoising reference region corresponding to the to-be-repaired seam texel in this round of denoising and repairing in the initial illumination map according to the to-be-repaired seam texel and the seam texel having the seam adjacency relationship with the to-be-repaired seam texel in the initial illumination map. The method further includes: taking an illumination map after this round of denoising and repairing as an initial illumination map for a next round of denoising and repair, taking the next round as a new round, and determining, for each to-be-repaired seam texel according to the to-be-repaired seam texel and the seam texel having the seam adjacency relationship with the to-be-repaired seam texel in the initial illumination map, the denoising reference region corresponding to the to-be-repaired seam texel in this round of denoising and repairing in the initial illumination map to iterate denoising and repair until an iteration stop condition is met, to obtain the target illumination map. In this embodiment, by performing multiple rounds of denoising and repairing on the initial illumination map, the model seam repair effect is further improved, thereby further improving the model rendering quality.

In an embodiment, in each round of denoising and repairing, a distance between any two adjacent sampling points in a filter kernel used in this round is greater than a distance between any two adjacent sampling points in a previous round. In this way, by iterating denoising and repair multiple rounds, a sampling range of the filter kernel can gradually cover the entire illumination map, achieving a large-range filtering sampling, and illumination information of each reference texel in the illumination map can be more fully utilized, thereby further improving the model seam repair effect.

In an embodiment, for each to-be-repaired seam texel, the computer device may determine the denoising reference region corresponding to the to-be-repaired seam texel in the initial illumination map according to a texel adjacent to the to-be-repaired seam texel in the initial illumination map and a texel adjacent to the seam texel having the seam adjacency relationship with the to-be-repaired seam texel in the initial illumination map. The denoising reference region includes the to-be-repaired seam texel, the texel adjacent to the to-be-repaired seam texel in the initial illumination map, the seam texel having the seam adjacency relationship with the to-be-repaired seam texel, and the texel adjacent to the seam texel having the seam adjacency relationship with the to-be-repaired seam texel in the initial illumination map.

In an embodiment, the computer device may denoise and repair, according to the illumination contribution parameters corresponding to the reference texels and the illumination data recorded for the reference texels in the initial illumination map, the illumination data recorded for the to-be-repaired seam texel in the initial illumination map, to obtain denoised illumination data corresponding to the to-be-repaired seam texel, and directly write the denoised illumination data back to the initial illumination map, to obtain the target illumination map. The denoised illumination data corresponding to the to-be-repaired seam texel may cover the illumination data recorded for the to-be-repaired seam texel in the initial illumination map.

In an embodiment, the computer device may denoise and repair, according to the illumination contribution parameters corresponding to the reference texels and the illumination data recorded for the reference texels in the initial illumination map, the illumination data recorded for the to-be-repaired seam texel in the initial illumination map, to obtain the denoised illumination map after denoising and repair, and directly take the denoised illumination map as the target illumination map.

In an embodiment, by determining the denoising reference region corresponding to the to-be-repaired seam texel in the initial illumination map according to the to-be-repaired seam texel and the seam texel having the seam adjacency relationship with the to-be-repaired seam texel in the initial illumination map, accuracy of the denoising reference region can be improved. The angle between the edge normal of the reference texel and the edge normal of the to-be-repaired seam texel is inversely proportional to the illumination contribution of the reference texel to the to-be-repaired seam texel. Therefore, accuracy of the illumination contribution parameter can be improved by determining, according to the angle between the edge normal of each reference texel in the denoising reference region and the edge normal of the to-be-repaired seam texel, the illumination contribution parameter corresponding to the reference texel. Then, the to-be-repaired seam texel in the initial illumination map is denoised and repaired based on the more accurate illumination contribution parameter, thereby performing illumination rendering on the initial three-dimensional mesh model based on a denoised target illumination map, which can improve rendering quality of the target three-dimensional mesh model after seam repair.

In an embodiment, the determining a denoising reference region corresponding to the to-be-repaired seam texel in the initial illumination map according to the to-be-repaired seam texel and a seam texel having the seam adjacency relationship with the to-be-repaired seam texel in the initial illumination map includes: determining, along a direction of the edge normal of the to-be-repaired seam texel, a first sampling range of a filter kernel configured for denoising and repairing; determining, along a direction of an edge normal of an adjacent seam texel, a second sampling range of the filter kernel; the adjacent seam texel being a seam texel having the seam adjacency relationship with the to-be-repaired seam texel; and determining the denoising reference region corresponding to the to-be-repaired seam texel in the initial illumination map according to the first sampling range and the second sampling range.

The first sampling range and the second sampling range of the filter kernel are respectively sampling ranges of the filter kernel that meet a target condition. The first sampling range and the second sampling range of the filter kernel jointly form a sampling range of the filter kernel.

Specifically, the computer device may determine, along the direction of the edge normal of the to-be-repaired seam texel, the first sampling range of the filter kernel configured for denoising and repairing, and determine, along the direction of the edge normal of the adjacent seam texel, the second sampling range of the filter kernel. The adjacent seam texel is a seam texel having the seam adjacency relationship with the to-be-repaired seam texel. Then, the computer device may take the first sampling range and the second sampling range together as the sampling range of the filter kernel, and determine the denoising reference region corresponding to the to-be-repaired seam texel in the initial illumination map according to the sampling range of the filter kernel. The reference texels included in the denoising reference region are texels covered by the sampling range of the filter kernel in the initial illumination map.

In an embodiment, the computer device may denoise and repair the to-be-repaired seam texel in the initial illumination map multiple rounds (e.g., two rounds).

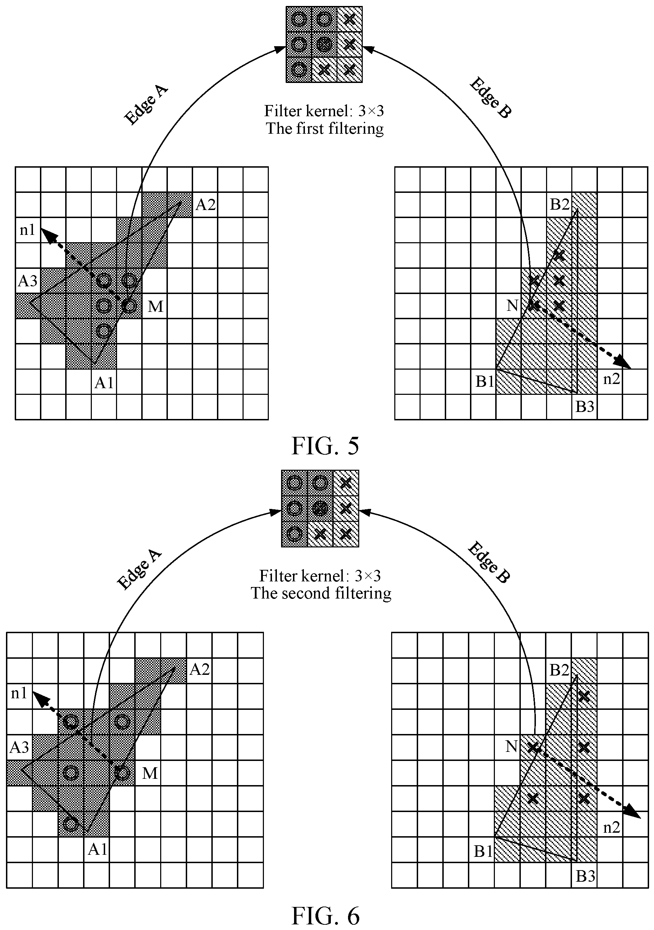

In each round of denoising and repairing, a distance between any two adjacent sampling points in a filter kernel used in this round is greater than a distance between any two adjacent sampling points in a previous round. For example, as shown in FIG. 5, the filter kernel configured for denoising and repairing is a $3\times3$ filter kernel. In the first round of denoising and repairing (the first filtering), the computer device may determine, along a direction of an edge normal n1 of a to-be-repaired seam texel (i.e., a point M on an edge A (A1A2) of a triangular mesh patch A1A2A3), the first sampling range of the filter kernel configured for denoising and repairing (i.e., sampling points of 5 circles in the triangular mesh patch A1A2A3). The computer device may determine, along a direction of an edge normal n2 of an adjacent seam texel (i.e., a point N on an edge B (B1B2) of a triangular mesh patch B1B2B3), the second sampling range of the filter kernel (i.e., sampling points of 5 crosses in the triangular mesh patch B1B2B3). Then, the computer device may determine the denoising reference region (i.e., the 5 circles in the triangular mesh patch A1A2A3 and the 5 crosses in the triangular mesh patch B1B2B3) corresponding to the to-be-repaired seam texel in the initial illumination map according to the first sampling range and the second sampling range.

In an embodiment, as shown in FIG. 6, in the second round of denoising and repairing (the second filtering), a distance between any two adjacent sampling points in a filter kernel used in the second round of denoising and repairing is greater than a distance between any two adjacent sampling points in the first round. Compared with the distance between any two adjacent sampling points in FIG. 5, the distance between any two adjacent sampling points in FIG. 6 is larger, and compared with the first round of denoising and repair, the filter kernel has a wider filtering range in the second round of denoising and repair, which further improves the model seam repair effect, thereby improving the model rendering quality.

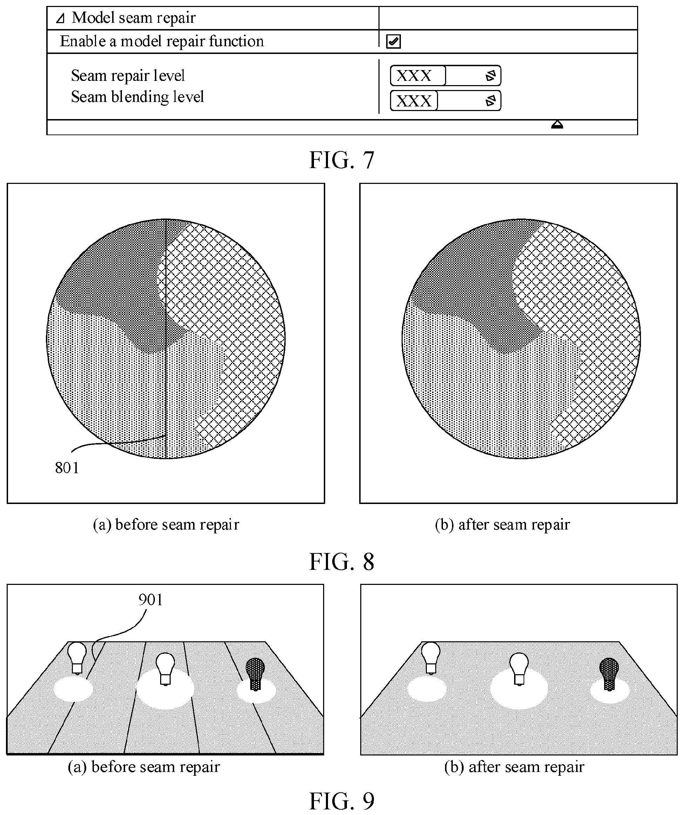

In an embodiment, FIG. 7 shows an interface corresponding to the computer device and configured for configuring parameters involved during denoising and repairing (i.e., model seam repair). Model seam repair may be enabled by checking "Enable a model repair function" on the parameter configuration interface. A parameter "Seam repair level" may be configured for configuring the sampling range of the filter kernel and a quantity of times of iteration of multiple rounds of denoising and repairing.

In the above embodiments, the direction of the texel edge normal is consistent with a direction of an inner side of the mesh patch where the illumination data is recorded. Therefore, by determining the first sampling range along the direction of the edge normal of the to-be-repaired seam texel and determining the second sampling range along the direction of the edge normal of the adjacent seam texel, sampling of invalid texels, i.e., texels in the illumination map for which no illumination data is recorded, can be prevented. Then, the denoising reference region corresponding to the to-be-repaired seam texel in the initial illumination map is determined according to the first sampling range and the second sampling range, which can improve accuracy of the denoising reference region.

In an embodiment, the denoising and repairing, according to the illumination contribution parameters corresponding to the reference texels and illumination data recorded for the reference texels in the initial illumination map, illumination data recorded for the to-be-repaired seam texel in the initial illumination map, to obtain a target illumination map includes: denoising and repairing, according to the illumination contribution parameters corresponding to the reference texels and the illumination data recorded for the reference texels in the initial illumination map, the illumination data recorded for the to-be-repaired seam texel in the initial illumination map, to obtain denoised illumination data corresponding to the to-be-repaired seam texel; blending the denoised illumination data corresponding to the to-be-repaired seam texel with illumination data before denoising, to obtain blended illumination data corresponding to the to-be-repaired seam texel; and writing the blended illumination data respectively corresponding to the to-be-repaired seam texels back to the initial illumination map, to obtain the target illumination map.

The blended illumination data is illumination data obtained after the denoised illumination data corresponding to the to-be-repaired seam texel is blended with the illumination data before denoising. Both the denoised illumination data corresponding to the to-be-repaired seam texel and the illumination data before denoising corresponding to the to-be-repaired seam texel are taken into account in the blended illumination data.

In an embodiment, the computer device may denoise and repair, according to the illumination contribution parameters corresponding to the reference texels and the illumination data recorded for the reference texels in the initial illumination map, the illumination data recorded for the to-be-repaired seam texel in the initial illumination map, to obtain denoised illumination data corresponding to the to-be-repaired seam texel. The computer device may acquire a blending coefficient for the denoised illumination data corresponding to the to-be-repaired seam texel, and blend the denoised illumination data corresponding to the to-be-repaired seam texel with the illumination data before denoising based on the blending coefficient for the denoised illumination data corresponding to the to-be-repaired seam texel, to obtain the blended illumination data corresponding to the to-be-repaired seam texel. Then, the computer device may write the blended illumination data corresponding to each to-be-repaired seam texel back to the initial illumination map, to obtain the target illumination map. Still referring to FIG. 7, a parameter "Seam blending level" parameter may be configured for configuring the blending coefficient for blending illumination data corresponding to texels.

In an embodiment, the blending coefficient for the denoised illumination data corresponding to the to-be-repaired seam texel may be taken as a blending weight for the denoised illumination data corresponding to the to-be-repaired seam texel, and the denoised illumination data corresponding to the to-be-repaired seam texel is blended with the illumination data before denoising based on the blending coefficient, to obtain the blended illumination data corresponding to the to-be-repaired seam texel. For example, if the blending coefficient (the blending weight) for the denoised illumination data corresponding to the to-be-repaired seam texel is a, a blending coefficient for the illumination data before denoising corresponding to the to-be-repaired seam texel is (1-a).

In an embodiment, the computer device may write the blended illumination data corresponding to each to-be-repaired seam texel back to the initial illumination map, to obtain a blended illumination map, and directly take the blended illumination map as the target illumination map. The blended illumination map is an illumination map obtained after the blended illumination data respectively corresponding to the to-be-repaired seam texels is written back to the initial illumination map. The blended illumination data corresponding to each to-be-repaired seam texel may cover the illumination data recorded for each to-be-repaired seam texel in the initial illumination map, to obtain the blended illumination map.

In the above embodiments, a difference between the denoised illumination data corresponding to the to-be-repaired seam texel and illumination data corresponding to secondary texels is excessively large. Therefore, by blending the denoised illumination data corresponding to the to-be-repaired seam texel with illumination data before denoising to obtain the blended illumination data corresponding to the to-be-repaired seam texel, the difference between the denoised illumination data corresponding to the to-be-repaired seam texel and the illumination data corresponding to the secondary texels can be reduced. Then, by writing the blended illumination data respectively corresponding to the to-be-repaired seam texels back to the initial illumination map to obtain the target illumination map, the rendering quality of the target three-dimensional mesh model after seam repair based on the target illumination map can be further improved.

In an embodiment, the writing the blended illumination data respectively corresponding to the to-be-repaired seam texels back to the initial illumination map, to obtain the target illumination map includes: writing the blended illumination data respectively corresponding to the to-be-repaired seam texels back to the initial illumination map, to obtain a blended illumination map; determining, along a direction of the edge normal of the to-be-repaired seam texel, a secondary texel adjacent to the to-be-repaired seam texel from the blended illumination map; and blending illumination data recorded for the secondary texel in the blended illumination map with illumination data recorded for an adjacent seam texel in the blended illumination map, to obtain the target illumination map; the adjacent seam texel being a seam texel having the seam adjacency relationship with the to-be-repaired seam texel.

In an embodiment, the secondary texel is a texel adjacent to the to-be-repaired seam texel in the illumination map. The computer device may write the blended illumination data corresponding to each to-be-repaired seam texel back to the initial illumination map, to obtain the blended illumination map. Then, the computer device may determine, along the direction of the edge normal of the to-be-repaired seam texel, the secondary texel adjacent to the to-be-repaired seam texel from the blended illumination map, acquire a blending coefficient for the secondary texel, and blend, based on the blending coefficient for the secondary texel, the illumination data recorded for the secondary texel in the blended illumination map with the illumination data recorded for the adjacent seam texel in the blended illumination map, to obtain the target illumination map. The adjacent seam texel is a seam texel having the seam adjacency relationship with the to-be-repaired seam texel.

In the above embodiments, a difference between the blended illumination data corresponding to the to-be-repaired seam texel and the illumination data corresponding to the secondary texel is excessively large, which may cause a seam to change from a dark-colored thin seam to a light-colored seam strip. Therefore, by blending the illumination data recorded for the secondary texel in the blended illumination map with the illumination data recorded for the adjacent seam texel in the blended illumination map to obtain the target illumination map, the difference between the blended illumination data corresponding to the to-be-repaired seam texel and the illumination data corresponding to the secondary texel can be reduced, thereby further improving the rendering quality of the target three-dimensional mesh model after seam repair based on the target illumination map.

In an embodiment, the denoising and repairing, according to the illumination contribution parameters corresponding to the reference texels and illumination data recorded for the reference texels in the initial illumination map, illumination data recorded for the to-be-repaired seam texel in the initial illumination map, to obtain a target illumination map includes: denoising and repairing, according to the illumination contribution parameters corresponding to the reference texels and the illumination data recorded for the reference texels in the initial illumination map, the illumination data recorded for the to-be-repaired seam texel in the initial illumination map, to obtain a denoised illumination map; for each of the to-be-repaired seam texels, determining, from the denoised illumination map, an unmapped texel adjacent to the to-be-repaired seam texel and having no illumination data recorded therefor; and filling the unmapped texel with illumination data recorded for an adjacent seam texel in the denoised illumination map, to obtain the target illumination map; the adjacent seam texel being a seam texel having the seam adjacency relationship with the to-be-repaired seam texel.

The denoised illumination map is an illumination map obtained after the illumination data recorded for the to-be-repaired seam texel in the initial illumination map is denoised and repaired. The unmapped texel is a texel in the illumination map and having no mapping relationship with the texel in the three-dimensional mesh model. No illumination data is recorded in the unmapped texel.

Specifically, the computer device may denoise and repair, according to the illumination contribution parameters corresponding to the reference texels and the illumination data recorded for the reference texels in the initial illumination map, the illumination data recorded for the to-be-repaired seam texel in the initial illumination map, to obtain the denoised illumination map. For each to-be-repaired seam texel, the computer device may determine, from the denoised illumination map, an unmapped texel adjacent to the to-be-repaired seam texel and having no illumination data recorded therefor. Then, the computer device may fill the unmapped texel with illumination data recorded for an adjacent seam texel in the denoised illumination map, to obtain the target illumination map. The adjacent seam texel is a seam texel having the seam adjacency relationship with the to-be-repaired seam texel. After the filling, illumination data is also recorded for the unmapped texel in the target illumination map.

In an embodiment, for each unmapped texel, in a case that the unmapped texel is adjacent to a plurality of to-be-repaired seam texels, the computer device may determine edge normals of the to-be-repaired seam texels respectively. For each unmapped texel, the unmapped texel is filled with illumination data preferentially by using an adjacent seam texel of a to-be-repaired seam texel opposite to the unmapped texel. If the unmapped texel does not have a to-be-repaired seam texel opposite to the unmapped texel, the unmapped texel is filled with illumination data by using an adjacent seam texel of a to-be-repaired seam texel at 45 degrees to the unmapped texel.

In the above embodiments, when illumination rendering is performed on the initial three-dimensional mesh model according to the target illumination map, the illumination data in the target illumination map is sampled by interpolation sampling (i.e., each sampling of illumination data may refer to illumination data recorded for a plurality of adjacent texels). Therefore, the unmapped texel is filled with illumination data recorded for the adjacent seam texel in the denoised illumination map, to obtain the target illumination map, which can prevent sampling of texels for which no illumination data is recorded during interpolation sampling, thereby further improving the model rendering quality.

In an embodiment, the determining, according to an angle between an edge normal of each reference texel in the denoising reference region and an edge normal of the to-be-repaired seam texel, an illumination contribution parameter corresponding to the reference texel includes: for each reference texel in the denoising reference region, determining a first normal influence parameter according to the angle between the edge normal of the reference texel and the edge normal of the to-be-repaired seam texel; and determining the illumination contribution parameter corresponding to the reference texel according to at least one of the first normal influence parameter, a second normal influence parameter, a distance influence parameter, and a brightness influence parameter; where the second normal influence parameter is configured for representing a degree of influence of a normal of the to-be-repaired seam texel in the three-dimensional virtual scene and a normal of the reference texel in the three-dimensional virtual scene on the illumination contribution; the distance influence parameter is configured for representing a degree of influence of a distance between the to-be-repaired seam texel and the reference texel in the three-dimensional virtual scene on the illumination contribution; and the brightness influence parameter is configured for representing a degree of influence of brightness of the to-be-repaired seam texel and brightness of the reference texel on the illumination contribution.

The first normal influence parameter is configured for representing a degree of influence of an angle between the edge normal of the reference texel and the edge normal of the to-be-repaired seam texel on the illumination contribution. The second normal influence parameter is determined according to the normal of the to-be-repaired seam texel in the three-dimensional virtual scene and the normal of the reference texel in the three-dimensional virtual scene. The distance influence parameter is determined according to the distance between the to-be-repaired seam texel and the reference texel in the three-dimensional virtual scene. The brightness influence parameter is determined according to the brightness of the to-be-repaired seam texel and the brightness of the reference texel.

In an embodiment, for each reference texel in the denoising reference region, the computer device may select a maximum value from zero and a first dot product result as the first normal influence parameter. The first dot product result is a vector dot product result between an edge normal vector of the reference texel and an edge normal vector of the to-be-repaired seam texel. The first dot product result is negatively correlated with the angle between the edge normal of the reference texel and the edge normal of the to-be-repaired seam texel.

In an embodiment, for each reference texel in the denoising reference region, the computer device may select a maximum value from zero and a second dot product result as the second normal influence parameter. The second dot product result is a vector dot product result between a normal vector of the reference texel in the three-dimensional virtual scene and a normal vector of the to-be-repaired seam texel in the three-dimensional virtual scene.

In an embodiment, the computer device may denoise and repair the illumination data recorded for the to-be-repaired seam texel by using the following formulas.

$$\hat{c}_{i+1}(p) = \frac{\sum_{q\in\Omega} w_i(p,q)\cdot\hat{c}_i(q)}{\sum_{q\in\Omega} w(p,q)};$$

$$w_i(p,q) = w_p \cdot w_n \cdot w_l \cdot w_{n'};$$

$$w_P = exp\left(-\frac{|P(p)-P(q)|}{\sigma_P|\nabla P(p)\cdot(p-q)|+\varepsilon}\right);$$

$$w_n = max\left(0, n(p)\cdot n(q)\right)^{\sigma_n};$$

$$w_l = exp\left(-\frac{|l_i(p)-l_i(q)|}{\sigma_l\sqrt{g_{3\times3}\left(Var\left(l_i(p)\right)\right)}+\varepsilon}\right);$$

and

$$w_{n'} = max\left(0, n'(p)\cdot n'(q)\right)^{\sigma_{n'}}$$

where p denotes the to-be-repaired seam texel, q denotes the reference texel, $\Omega$ denotes the denoising reference region, $i$ denotes a previous round of denoising and repairing, $i$+1 denotes this round of denoising and repairing, $\sigma_P, \sigma_n, \sigma_l, \sigma_{n'}$, and $\varepsilon$ are present constants, P(p) denotes a position of the to-be-repaired seam texel in the three-dimensional space, $|P(p) - P(q)|$ denotes a world space distance between a position of the reference texel in the three-dimensional space and the position of the to-be-repaired seam texel in the three-dimensional space, $n$ (p) denotes the normal vector of the to-be-repaired seam texel in the three-dimensional virtual scene, $n(q)$ denotes the normal vector of the reference texel in the three-dimensional virtual scene, $l_i(p)$ denotes a brightness value of the to-be-repaired seam texel after the previous round of denoising and repairing, $l_i(q)$ denotes a brightness value of the reference texel after the previous round of denoising and repairing, Var denotes a variance function, and $g_{3\times3}$ denotes a 3 *3 Gaussian function. $n'(p)$ denotes the edge normal vector of the to-be-repaired seam texel, and $n'(q)$ denotes the edge normal vector of the reference texel. $w_p$ denotes the distance influence parameter, $w_{n'}$ denotes the first normal influence parameter, $w_n$ denotes the second normal influence parameter, $w_l$ denotes the brightness influence parameter, $w_i$ (p, q) denotes an illumination contribution parameter of the reference texel for the to-be-repaired seam texel after the previous round of denoising and repairing, $\hat{c}_i(q)$ denotes illumination data (for example, the illumination data may be a color value or other illumination data other than the color value) recorded for the reference texel in the illumination map after the previous round of denoising and repairing, and $\hat{c}_{i+1}(p)$ denotes illumination data recorded for the to-be-repaired seam texel in the illumination map after this round of denoising and repairing.

In the above embodiments, the illumination contribution parameter corresponding to the reference texel is determined according to at least one of the first normal influence parameter, the second normal influence parameter, the distance influence parameter, and the brightness influence parameter, which can further improve the accuracy of the illumination contribution parameter, thereby further improving the model rendering quality.

In an embodiment, as shown in FIG. 8, (a) is a schematic diagram of an initial three-dimensional mesh model before seam repair. As can be seen, in (a), there is a clear seam defect 801 in the initial three-dimensional mesh model, which results in low model rendering quality. A target three-dimensional mesh model after seam repair in (b) may be obtained by performing seam repair on the initial three-dimensional mesh model by using the model seam repairing method in this application. As can be seen, in (b), there are no seam defects in the target three-dimensional mesh model, which improves the model rendering quality.

In an embodiment, as shown in FIG. 9, (a) is a schematic diagram of a plurality of continuous initial three-dimensional mesh models (e.g., 5 three-dimensional mesh models in FIG. 9) in a three-dimensional virtual scene before seam repair. As can be seen, in (a), there are clear seam defects 901 in regions where the plurality of initial three-dimensional mesh models are connected, thereby resulting in low rendering quality of a plurality of continuous models in the three-dimensional virtual scene. A plurality of continuous target three-dimensional mesh models in the three-dimensional virtual scene after seam repair in (b) may be obtained by performing seam repair on the plurality of continuous initial three-dimensional mesh models in the three-dimensional virtual scene by using the model seam repairing method in this application. As can be seen, in (b), there are no seam defects in the plurality of continuous target three-dimensional mesh models in the three-dimensional virtual scene, which improves the rendering quality of the plurality of continuous models in the three-dimensional virtual scene.

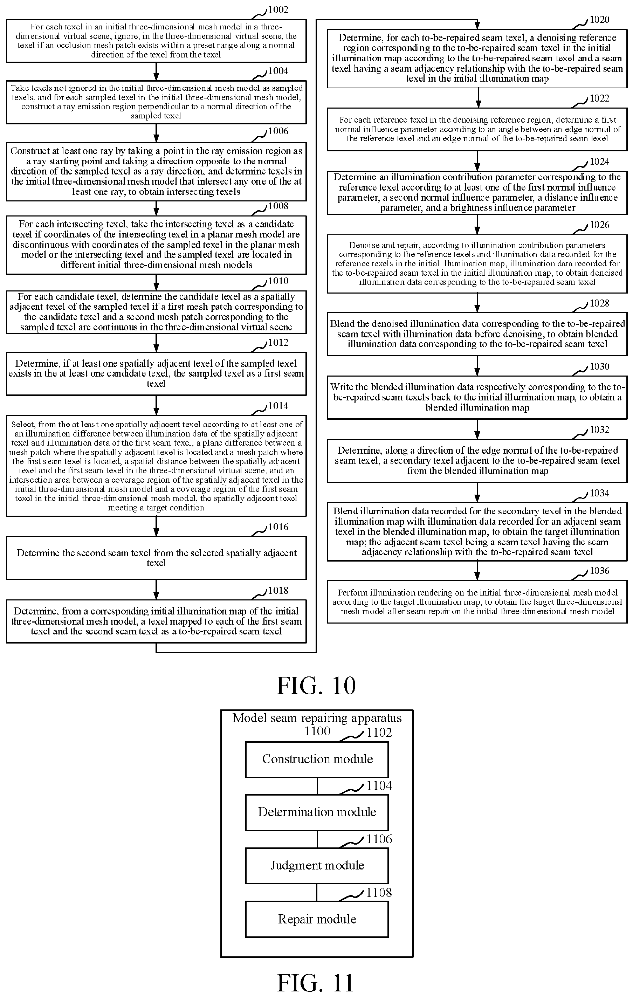

As shown in FIG. 10, in an embodiment, a model seam repairing method is provided. The method may be applied to a computer device. The computer device may be a terminal or a server. The method may be performed by the terminal or the server alone, or may be implemented through interaction between the terminal and the server. This embodiment is described by using an example in which the method is applied to a computer device. The method specifically includes the following operations:

Operation 1002: For each texel in an initial three-dimensional mesh model in a three-dimensional virtual scene, ignore, in the three-dimensional virtual scene, the texel if an occlusion mesh patch exists within a preset range along a normal direction of the texel from the texel.

Operation 1004: Take texels not ignored in the initial three-dimensional mesh model as sampled texels, and for each sampled texel in the initial three-dimensional mesh model, construct a ray emission region perpendicular to a normal direction of the sampled texel.

Operation 1006: Construct at least one ray by taking a point in the ray emission region as a ray starting point and taking a direction opposite to the normal direction of the sampled texel as a ray direction, and determine texels in the initial three-dimensional mesh model that intersect any one of the at least one ray, to obtain intersecting texels.

Operation 1008: For each intersecting texel, take the intersecting texel as a candidate texel if coordinates of the intersecting texel in a planar mesh model are discontinuous with coordinates of the sampled texel in the planar mesh model or the intersecting texel and the sampled texel are located in different initial three-dimensional mesh models.

Operation 1010: For each candidate texel, determine the candidate texel as a spatially adjacent texel of the sampled texel if a first mesh patch corresponding to the candidate texel and a second mesh patch corresponding to the sampled texel are continuous in the three-dimensional virtual scene.

Operation 1012: Determine, if at least one spatially adjacent texel of the sampled texel exists in the at least one candidate texel, the sampled texel as a first seam texel.

Operation 1014: Select, from the at least one spatially adjacent texel according to at least one of an illumination difference between illumination data of the spatially adjacent texel and illumination data of the first seam texel, a plane difference between a mesh patch where the spatially adjacent texel is located and a mesh patch where the first seam texel is located, a spatial distance between the spatially adjacent texel and the first seam texel in the three-dimensional virtual scene, and an intersection area between a coverage region of the spatially adjacent texel in the initial three-dimensional mesh model and a coverage region of the first seam texel in the initial three-dimensional mesh model, the spatially adjacent texel meeting a target condition.

Operation 1016: Determine the second seam texel from the selected spatially adjacent texel.

Operation 1018: Determine, from a corresponding initial illumination map of the initial three-dimensional mesh model, a texel mapped to each of the first seam texel and the second seam texel as a to-be-repaired seam texel.

Operation 1020: Determine, for each to-be-repaired seam texel, a denoising reference region corresponding to the to-be-repaired seam texel in the initial illumination map according to the to-be-repaired seam texel and a seam texel having a seam adjacency relationship with the to-be-repaired seam texel in the initial illumination map.

Operation 1022: For each reference texel in the denoising reference region, determine a first normal influence parameter according to the angle between an edge normal of the reference texel and an edge normal of the to-be-repaired seam texel.

Operation 1024: Determine an illumination contribution parameter corresponding to the reference texel according to at least one of the first normal influence parameter, a second normal influence parameter, a distance influence parameter, and a brightness influence parameter.

Operation 1026: Denoise and repair, according to illumination contribution parameters corresponding to the reference texels and illumination data recorded for the reference texels in the initial illumination map, illumination data recorded for the to-be-repaired seam texel in the initial illumination map, to obtain denoised illumination data corresponding to the to-be-repaired seam texel.

Operation 1028: Blend the denoised illumination data corresponding to the to-be-repaired seam texel with illumination data before denoising, to obtain blended illumination data corresponding to the to-be-repaired seam texel.

Operation 1030: Write the blended illumination data respectively corresponding to the to-be-repaired seam texels back to the initial illumination map, to obtain a blended illumination map.

Operation 1032: Determine, along a direction of the edge normal of the to-be-repaired seam texel, a secondary texel adjacent to the to-be-repaired seam texel from the blended illumination map.

Operation 1034: Blend illumination data recorded for the secondary texel in the blended illumination map with illumination data recorded for an adjacent seam texel in the blended illumination map, to obtain the target illumination map; the adjacent seam texel being a seam texel having the seam adjacency relationship with the to-be-repaired seam texel.

Operation 1036: Perform illumination rendering on the initial three-dimensional mesh model according to the target illumination map, to obtain the target three-dimensional mesh model after seam repair on the initial three-dimensional mesh model.

This application further provides an application scene. The foregoing model seam repairing method is applied to the application scene. Specifically, the model seam repairing method may be applied to seam repair scenes of game models in a game field.

The three-dimensional virtual scene includes a game scene, the initial three-dimensional mesh model includes an initial game model, and the target three-dimensional mesh model includes a target game model. A game model in the game scene may have a seam effect. Seam repair may be performed on the game model in the game scene by using the model seam repairing method in this application. For example, the game model may include at least one of a virtual table, a virtual chair, a virtual desk lamp, and the like in the game scene. Seam repair may be performed on the virtual table, the virtual chair, the virtual desk lamp, and the like by using the model seam repairing method in this application, which improves rendering quality of the game model in the game scene.

Specifically, for each texel in the initial game model in the game scene, in the game scene, the computer device may ignore the texel if an occlusion mesh patch exists within a preset range along a normal direction of the texel from the texel. Texels not ignored in the initial game model are taken as sampled texels, and for each sampled texel in the initial game model, a ray emission region perpendicular to a normal direction of the sampled texel is constructed. At least one ray is constructed by taking a point in the ray emission region as a ray starting point and taking a direction opposite to the normal direction of the sampled texel as a ray direction, and texels in the initial game model that intersect any one of the at least one ray are determined, to obtain intersecting texels. For each intersecting texel, the intersecting texel is taken as a candidate texel if coordinates of the intersecting texel in a planar mesh model are discontinuous with coordinates of the sampled texel in the planar mesh model or the intersecting texel and the sampled texel are located in different initial game models. For each candidate texel, the candidate texel is determined as a spatially adjacent texel of the sampled texel if a first mesh patch corresponding to the candidate texel and a second mesh patch corresponding to the sampled texel are continuous in the game scene. If at least one spatially adjacent texel of the sampled texel exists in the at least one candidate texel, the sampled texel is determined as the first seam texel.

The computer device may select, from the at least one spatially adjacent texel according to at least one of an illumination difference between illumination data of the spatially adjacent texel and illumination data of the first seam texel, a plane difference between a mesh patch where the spatially adjacent texel is located and a mesh patch where the first seam texel is located, a spatial distance between the spatially adjacent texel and the first seam texel in the game scene, and an intersection area between a coverage region of the spatially adjacent texel in the initial game model and a coverage region of the first seam texel in the initial game model, the spatially adjacent texel meeting a target condition. The second seam texel is determined from the selected spatially adjacent texel.

The computer device may determine, from a corresponding initial illumination map of the initial game model, a texel mapped to each of the first seam texel and the second seam texel as a to-be-repaired seam texel. For each to-be-repaired seam texel, a denoising reference region corresponding to the to-be-repaired seam texel in the initial illumination map is determined according to the to-be-repaired seam texel and a seam texel having the seam adjacency relationship with the to-be-repaired seam texel in the initial illumination map. For each reference texel in the denoising reference region, a first normal influence parameter is determined according to an angle between an edge normal of the reference texel and an edge normal of the to-be-repaired seam texel. The illumination contribution parameter corresponding to the reference texel is determined according to at least one of the first normal influence parameter, a second normal influence parameter, a distance influence parameter, and a brightness influence parameter. The illumination data recorded for the to-be-repaired seam texel in the initial illumination map is denoised and repaired according to the illumination contribution parameters corresponding to the reference texels and the illumination data recorded for the reference texels in the initial illumination map, to obtain denoised illumination data corresponding to the to-be-repaired seam texel.

The computer device may blend the denoised illumination data corresponding to the to-be-repaired seam texel with illumination data before denoising, to obtain blended illumination data corresponding to the to-be-repaired seam texel. The blended illumination data corresponding to each to-be-repaired seam texel is written back to the initial illumination map, to obtain a blended illumination map. Along a direction of the edge normal of the to-be-repaired seam texel, a secondary texel adjacent to the to-be-repaired seam texel is determined from the blended illumination map. Illumination data recorded for the secondary texel in the blended illumination map is blended with illumination data recorded for an adjacent seam texel in the blended illumination map, to obtain the target illumination map. The adjacent seam texel is a seam texel having the seam adjacency relationship with the to-be-repaired seam texel. Illumination rendering is performed on the initial game model according to the target illumination map, to obtain the target game model after seam repair on the initial game model. Repair efficiency of the game model in the game scene and rendering quality of the game model can be improved by using the model seam repairing method in this application.

This application further provides some application scenes. The foregoing model seam repairing method is applied to the application scenes. Specifically, this application may further be applied to scenes such as film and television special effects, visual design, VR, industrial simulation, and digital cultural creation. The scenes such as film and television special effects, visual design, VR, industrial simulation, and digital cultural creation may include a virtual object model, the initial three-dimensional mesh model includes an initial virtual model, and the target three-dimensional mesh model includes a target virtual model. Seam repair may be performed on the virtual object model by using the model seam repairing method in this application, thereby improving rendering quality of the virtual object model.

This application may be applied to industrial simulation scenes. The three-dimensional virtual scene includes an industrial simulation scene, the initial three-dimensional mesh model includes an initial industrial model, and the target three-dimensional mesh model includes a target industrial model. An industrial model in the industrial simulation scene may have a seam effect. Seam repair may be performed on the industrial model by using the model seam repairing method in this application, thereby improving rendering quality of the industrial model in the industrial simulation scene.

Although the steps in the flowcharts of the embodiments are displayed sequentially according to a sequence, these steps are not necessarily performed sequentially according to the sequence. Unless otherwise explicitly specified herein, execution of the steps is not strictly limited, and the steps may be performed in other sequences. Moreover, at least some of the steps in each embodiment may include a plurality of sub-steps or a plurality of stages. The sub-steps or stages are not necessarily performed at the same moment but may be performed at different moments. Execution of the sub-steps or stages is not necessarily sequentially performed, but may be performed in turn or alternately with other steps or at least some of sub-steps or stages of other steps.

In an embodiment, as shown in FIG. 11, a model seam repairing apparatus 1100 is provided. The apparatus specifically includes:

a construction module 1102, configured to determine sampled texels obtained by sampling texels of an initial three-dimensional mesh model in a three-dimensional virtual scene, and for each of the sampled texels, constructing a ray emission region, such that a plane in which the ray emission region is located is perpendicular to a normal direction of the sampled texel;

a determination module 1104, configured to obtain at least one ray by determining a ray starting point in the ray emission region and a ray direction opposite to the normal direction of the sampled texel, and determining at least one candidate texel in the initial three-dimensional mesh model that intersects one of the at least one ray;

a judgment module 1106, configured to, if at least one texel of the at least one candidate texel is spatially adjacent to the sampled texel, determine the sampled texel as a first seam texel;

the determination module 1104 being further configured to determine, from the at least one texel spatially adjacent to the sampled texel, a second seam texel spatially adjacent to the first seam texel; and

a repair module 1108, configured to adjust the first seam texel and the second seam texel in the initial three-dimensional mesh model, to obtain a repaired target three-dimensional mesh model.

In an embodiment, the construction module 1102 is further configured to, for each of the texels in the initial three-dimensional mesh model, ignore, in the three-dimensional virtual scene, the texel if an occlusion mesh patch exists within a preset range along a normal direction of the texel from the texel; the occlusion mesh patch being a mesh patch in the initial three-dimensional mesh model other than a mesh patch where the texel is located; and take the texels not ignored in the initial three-dimensional mesh model as the sampled texels.

In an embodiment, the determination module 1104 is further configured to determine the texels in the initial three-dimensional mesh model that intersect any one of the at least one ray, to obtain intersecting texels; and for each of the intersecting texels, take the intersecting texel as a candidate texel if coordinates of the intersecting texel in a planar mesh model are discontinuous with coordinates of the sampled texel in the planar mesh model or the intersecting texel and the sampled texel are located in different initial three-dimensional mesh models; where the planar mesh model is a mesh model after two-dimensional flattening on the initial three-dimensional mesh model.

In an embodiment, the judgment module 1106 is further configured to, for each of the at least one candidate texel, determine the candidate texel as a spatially adjacent texel of the sampled texel if a first mesh patch corresponding to the candidate texel and a second mesh patch corresponding to the sampled texel are continuous in the three-dimensional virtual scene; where the first mesh patch is a mesh patch where the candidate texel is located in the initial three-dimensional mesh model; and the second mesh patch is a mesh patch where the sampled texel is located in the initial three-dimensional mesh model.

In an embodiment, the determination module 1104 is further configured to select, from the at least one spatially adjacent texel according to at least one of an illumination difference between illumination data of the spatially adjacent texel and illumination data of the first seam texel, a plane difference between a mesh patch where the spatially adjacent texel is located and a mesh patch where the first seam texel is located, a spatial distance between the spatially adjacent texel and the first seam texel in the three-dimensional virtual scene, and an intersection area between a coverage region of the spatially adjacent texel in the initial three-dimensional mesh model and a coverage region of the first seam texel in the initial three-dimensional mesh model, the spatially adjacent texel meeting a target condition; and determine the second seam texel from the selected spatially adjacent texel.

In an embodiment, the determination module 1104 is further configured to, in a case that the at least one spatially adjacent texel is screened according to the illumination difference between the illumination data of the spatially adjacent texel and the illumination data of the first seam texel, for each of the at least one spatially adjacent texel, determine a normal angle between the mesh patches corresponding to the spatially adjacent texel and the first seam texel, to obtain a first angle corresponding to the spatially adjacent texel; the first angle being positively correlated with the illumination difference; and select, from the at least one spatially adjacent texel, the spatially adjacent texel with the first angle less than or equal to a preset angle.

In an embodiment, the determination module 1104 is further configured to, in a case that the at least one spatially adjacent texel is screened according to the plane difference between the mesh patch where the spatially adjacent texel is located and the mesh patch where the first seam texel is located, select, from the at least one spatially adjacent texel, a spatially adjacent texel having a patch coplanarity relationship with the first seam texel; where a mesh patch corresponding to the selected spatially adjacent texel and the mesh patch corresponding to the first seam texel are on the same plane.

In an embodiment, the determination module 1104 is further configured to, in a case that the at least one spatially adjacent texel is screened according to the spatial distance between the spatially adjacent texel and the first seam texel in the three-dimensional virtual scene, select, from the at least one spatially adjacent texel, the spatially adjacent texel with the spatial distance less than or equal to a preset distance; where the preset distance is less than or equal to a texel radius of the first seam texel.

In an embodiment, the determination module 1104 is further configured to, in a case that the at least one spatially adjacent texel is screened according to the intersection area between the coverage region of the spatially adjacent texel in the initial three-dimensional mesh model and the coverage region of the first seam texel in the initial three-dimensional mesh model, for each of the at least one spatially adjacent texel, determine an angle between a texel vector and a reverse edge normal vector corresponding to the first seam texel, to obtain a second angle corresponding to the spatially adjacent texel; the texel vector being a vector pointing from the first seam texel to the spatially adjacent texel; the reverse edge normal vector being opposite to a direction of an edge normal of the first seam texel; and select, from the at least one spatially adjacent texel, the spatially adjacent texel with a minimum second angle; where a size of the second angle is negatively correlated with a size of the intersection area.

In an embodiment, the initial three-dimensional mesh model has a corresponding initial illumination map; and the repair module 1108 is further configured to determine, from the initial illumination map, a texel mapped to each of the first seam texel and the second seam texel as a to-be-repaired seam texel; determine, for each of the to-be-repaired seam texels, a denoising reference region corresponding to the to-be-repaired seam texel in the initial illumination map according to the to-be-repaired seam texel and a seam texel having the seam adjacency relationship with the to-be-repaired seam texel in the initial illumination map; determine, according to an angle between an edge normal of each reference texel in the denoising reference region and an edge normal of the to-be-repaired seam texel, an illumination contribution parameter corresponding to the reference texel; denoise and repair, according to the illumination contribution parameters corresponding to the reference texels and illumination data recorded for the reference texels in the initial illumination map, illumination data recorded for the to-be-repaired seam texel in the initial illumination map, to obtain a target illumination map; and perform illumination rendering on the initial three-dimensional mesh model according to the target illumination map, to obtain the target three-dimensional mesh model after seam repair on the initial three-dimensional mesh model.

In an embodiment, the repair module 1108 is further configured to determine, along a direction of the edge normal of the to-be-repaired seam texel, a first sampling range of a filter kernel configured for denoising and repairing; determine, along a direction of an edge normal of an adjacent seam texel, a second sampling range of the filter kernel; the adjacent seam texel being a seam texel having the seam adjacency relationship with the to-be-repaired seam texel; and determine the denoising reference region corresponding to the to-be-repaired seam texel in the initial illumination map according to the first sampling range and the second sampling range.

In an embodiment, the repair module 1108 is further configured to denoise and repair, according to the illumination contribution parameters corresponding to the reference texels and the illumination data recorded for the reference texels in the initial illumination map, the illumination data recorded for the to-be-repaired seam texel in the initial illumination map, to obtain denoised illumination data corresponding to the to-be-repaired seam texel; blend the denoised illumination data corresponding to the to-be-repaired seam texel with illumination data before denoising, to obtain blended illumination data corresponding to the to-be-repaired seam texel; and write the blended illumination data respectively corresponding to the to-be-repaired seam texels back to the initial illumination map, to obtain the target illumination map.

In an embodiment, the repair module 1108 is further configured to write the blended illumination data respectively corresponding to the to-be-repaired seam texels back to the initial illumination map, to obtain a blended illumination map; determine, along a direction of the edge normal of the to-be-repaired seam texel, a secondary texel adjacent to the to-be-repaired seam texel from the blended illumination map; and blending illumination data recorded for the secondary texel in the blended illumination map with illumination data recorded for an adjacent seam texel in the blended illumination map, to obtain the target illumination map; the adjacent seam texel being a seam texel having the seam adjacency relationship with the to-be-repaired seam texel.

In an embodiment, the repair module 1108 is further configured to denoise and repair, according to the illumination contribution parameters corresponding to the reference texels and the illumination data recorded for the reference texels in the initial illumination map, the illumination data recorded for the to-be-repaired seam texel in the initial illumination map, to obtain a denoised illumination map; for each of the to-be-repaired seam texels, determine, from the denoised illumination map, an unmapped texel adjacent to the to-be-repaired seam texel and having no illumination data recorded therefor; and fill the unmapped texel with illumination data recorded for an adjacent seam texel in the denoised illumination map, to obtain the target illumination map; the adjacent seam texel being a seam texel having the seam adjacency relationship with the to-be-repaired seam texel.

In an embodiment, the repair module 1108 is further configured to, for each reference texel in the denoising reference region, determine a first normal influence parameter according to the angle between the edge normal of the reference texel and the edge normal of the to-be-repaired seam texel; and determine the illumination contribution parameter corresponding to the reference texel according to at least one of the first normal influence parameter, a second normal influence parameter, a distance influence parameter, and a brightness influence parameter; where the second normal influence parameter is configured for representing a degree of influence of a normal of the to-be-repaired seam texel in the three-dimensional virtual scene and a normal of the reference texel in the three-dimensional virtual scene on the illumination contribution; the distance influence parameter is configured for representing a degree of influence of a distance between the to-be-repaired seam texel and the reference texel in the three-dimensional virtual scene on the illumination contribution; and the brightness influence parameter is configured for representing a degree of influence of brightness of the to-be-repaired seam texel and brightness of the reference texel on the illumination contribution.

In the above model seam repairing apparatus, for each sampled texel in an initial three-dimensional mesh model in a three-dimensional virtual scene, a ray emission region perpendicular to a normal direction of the sampled texel is constructed, at least one ray is constructed by taking a point in the ray emission region as a ray starting point and taking a direction opposite to the normal direction of the sampled texel as a ray direction, and texels in the initial three-dimensional mesh model that intersect any one of the at least one ray are determined, to obtain at least one candidate texel. If at least one spatially adjacent texel of the sampled texel exists in the at least one candidate texel, the sampled texel is determined as a first seam texel. A second seam texel having a seam adjacency relationship with the first seam texel may be quickly determined from the at least one spatially adjacent texel. Then, the first seam texel and the second seam texel in the initial three-dimensional mesh model are repaired, to obtain a target three-dimensional mesh model after seam repair. Compared with the conventional manner of traversing model vertices one by one to search for seam texels, in the seam searching manner in this application, there is no need to traverse model vertices to search for seam texels; instead, the seam texels are searched for by constructing a ray emission region and generating rays by the ray emission region to intersect with the initial three-dimensional mesh model, which improves search efficiency of the seam texels of the model. Then, the first seam texel and the second seam texel quickly found are repaired, which can improve seam repair efficiency of the model.

All or some of the modules in the foregoing model seam repairing apparatus may be implemented by using software, hardware, or a combination thereof. The modules may be built in or stand alone from a processor in a computer device in a form of hardware, or may be stored in a memory in a computer device in a form of software, so that the processor can invoke and execute operations corresponding to the modules.

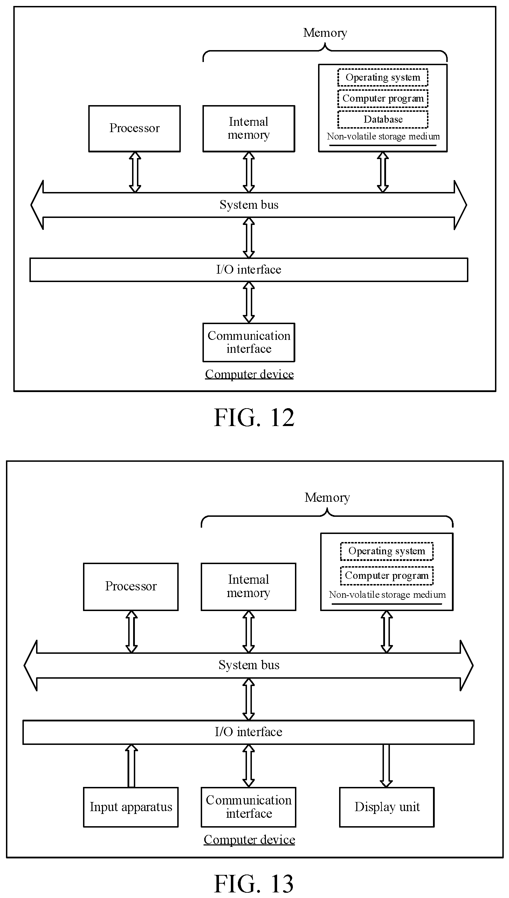

In an embodiment, a computer device is provided. The computer device may be a server, and an internal structure diagram thereof may be shown in FIG. 12. The computer device includes a processor, a memory, an input/output (I/O) interface, and a communication interface. The processor, the memory, and the I/O interface are connected to each other by using a system bus, and the communication interface is connected to the system bus by using the I/O interface. The processor of the computer device is configured to provide computing and control capabilities. The memory of the computer device includes a non-volatile storage medium and an internal memory. The non-volatile storage medium stores an operating system, a computer program, and a database. The internal memory provides an environment for operation of the operating system and the computer program in the non-volatile storage medium. The I/O interface of the computer device is configured to exchange information between the processor and an external device. The communication interface of the computer device is configured to connect and communicate with an external terminal via a network. The computer program, when executed by the processor, implements the model seam repairing method described above.

In an embodiment, a computer device is provided. The computer device may be a terminal, and an internal structure thereof may be shown as FIG. 13. The computer device includes a processor, a memory, an I/O interface, a communication interface, a display unit, and an input apparatus. The processor, the memory, and the I/O interface are connected to each other by using a system bus, and the communication interface, the display unit, and the input apparatus are connected to the system bus by using the I/O interface. The processor of the computer device is configured to provide computing and control capabilities. The memory of the computer device includes a non-volatile storage medium and an internal memory. The non-volatile storage medium stores an operating system and a computer program. The internal memory provides an environment for operation of the operating system and the computer program in the non-volatile storage medium. The I/O interface of the computer device is configured to exchange information between the processor and an external device. The communication interface of the computer device is configured to communicate with an external terminal in a wired or wireless manner. The wireless manner may be implemented by WIFI, a mobile cellular network, near field communication (NFC), or another technology. The computer program, when executed by the processor, implements the model seam repairing method described above. The display unit of the computer device may be configured to form a visually visible screen and may be a display screen, a projection apparatus, or a VR imaging apparatus. The display screen may be a liquid crystal display screen or an e-ink display screen. The input apparatus of the computer device may be a touch layer covering the display screen, or may be a key, a trackball, or a touchpad disposed on a housing of the computer device, or may be an external keyboard, a touchpad, a mouse, or the like.

A person skilled in the art may understand that the structures shown in FIG. 12 and FIG. 13 are merely block diagrams of partial structures related to the solution in this application, and do not constitute a limitation on the computer device to which the solution in this application is applied. Specifically, the computer device may include more or fewer components than those shown in the figures, or have some components combined, or have a different component arrangement.

In an embodiment, a computer device is further provided, including: a memory and a processor, the memory stores a computer program, and the computer program is executed by the processor to perform the steps of the foregoing method embodiments.

In an embodiment, a computer-readable storage medium is provided, having a computer program stored therein, and the computer program is executed by a processor to perform the steps of the foregoing method embodiments.

In some embodiments, a computer program product is provided, including a computer program. When the computer program is executed by a processor, the steps in the foregoing method embodiments are implemented.

User information (including, but not limited to, user equipment information, user personal information, and the like) and data (including, but not limited to, data for analysis, stored data, displayed data, and the like) involved in this application are all information and data authorized by users or fully authorized by all parties, and collection, use, and processing of relevant data need to comply with relevant laws, regulations, and standards of relevant countries and regions.

A person of ordinary skill in the art may understand that all or some of procedures of the method in the foregoing embodiments may be implemented by a computer program instructing relevant hardware. The computer program may be stored in a non-volatile computer-readable storage medium. When the computer program is executed, the procedures of the foregoing method embodiments may be implemented. Any reference to a memory, a storage, a database, or another medium used in the embodiments provided in this application may include at least one of a non-volatile memory and a volatile memory. The non-volatile memory may include a read-only memory (ROM), a magnetic tape, a floppy disk, a flash memory, or an optical memory. The volatile memory may include a random-access memory (RAM) or an external cache. For the purpose of illustration but not limitation, the RAM is available in many forms, for example, a static random access memory (SRAM) or a dynamic random access memory (DRAM).

Technical features of the foregoing embodiments may be randomly combined. To make the description concise, not all possible combinations of the technical features in the foregoing embodiments are described. However, the combinations of these technical features shall be considered as falling within the scope recorded by this specification provided that no conflict exists.

The foregoing embodiments only describe several implementations of this application, which are described specifically and in detail, but cannot be construed as a limitation on the patent scope of the present disclosure. For a person of ordinary skill in the art, several transformations and improvements can be made without departing from the idea of this application, all of which fall within the protection scope of this application. Therefore, the protection scope of the patent of this application shall be subject to the appended claims.

**Claims**

1. A method of repairing a model seam, performed by a computer device and comprising:

    determining sampled texels obtained by sampling texels of an initial three-dimensional mesh model in a three-dimensional virtual scene, and for each of the sampled texels, constructing a ray emission region, such that a plane in which the ray emission region is located is perpendicular to a normal direction of the sampled texel; obtaining at least one ray by determining a ray starting point in the ray emission region and a ray direction opposite to the normal direction of the sampled texel, and determining at least one candidate texel in the initial three-dimensional mesh model that intersects one of the at least one ray; if at least one texel of the at least one candidate texel is spatially adjacent to the sampled texel, determining the sampled texel as a first seam texel; determining, from the at least one texel spatially adjacent to the sampled texel, a second seam texel spatially adjacent to the first seam texel; and adjusting the first seam texel and the second seam texel in the initial three-dimensional mesh model, to obtain a repaired target three-dimensional mesh model.

2. The method according to claim 1, wherein the determining sampled texels obtained by sampling texels of an initial three-dimensional mesh model in a three-dimensional virtual scene comprises:

    for each of the texels in the initial three-dimensional mesh model, ignoring, in the three-dimensional virtual scene, the texel if an occlusion mesh patch exists within a preset range along a normal direction of the texel from the texel; the occlusion mesh patch being a mesh patch in the initial three-dimensional mesh model other than a mesh patch where the texel is located; and taking the texels not ignored in the initial three-dimensional mesh model as the sampled texels.

3. The method according to claim 1 or 2, wherein the determining at least one candidate texel in the initial three-dimensional mesh model that intersects one of the at least one ray comprises:

    determining the texels in the initial three-dimensional mesh model that intersect one of the at least one ray, to obtain intersecting texels; and for each of the intersecting texels, taking the intersecting texel as a candidate texel if coordinates of the intersecting texel in a planar mesh model are discontinuous with coordinates of the sampled texel in the planar mesh model or the intersecting texel and the sampled texel are located in different initial three-dimensional mesh models; wherein the planar mesh model is a mesh model after two-dimensional flattening on the initial three-dimensional mesh model.

4. The method according to any one of claims 1 to 3, wherein the method further comprises:

    for each of the at least one candidate texel, determining the candidate texel as a texel spatially adjacent to the sampled texel if a first mesh patch corresponding to the candidate texel and a second mesh patch corresponding to the sampled texel are continuous in the three-dimensional virtual scene; wherein the first mesh patch is a mesh patch where the candidate texel is located in the initial three-dimensional mesh model; and the second mesh patch is a mesh patch where the sampled texel is located in the initial three-dimensional mesh model.

5. The method according to any one of claims 1 to 4, wherein the determining, from the at least one texel spatially adjacent to the sampled texel, a second seam texel spatially adjacent to the first seam texel comprises:

    selecting, from the at least one texel, the spatially adjacent texel meeting a target condition according to at least one of an illumination difference between illumination data of the spatially adjacent texel and illumination data of the first seam texel, a plane difference between a mesh patch where the spatially adjacent texel is located and a mesh patch where the first seam texel is located, a spatial distance between the spatially adjacent texel and the first seam texel in the three-dimensional virtual scene, and an intersection area between a coverage region of the spatially adjacent texel in the initial three-dimensional mesh model and a coverage region of the first seam texel in the initial three-dimensional mesh model; and determining the second seam texel from the selected spatially adjacent texel.

6. The image processing method according to claim 5, wherein the selecting, from the at least one texel, the spatially adjacent texel meeting a target condition comprises:

in a case that the at least one texel is screened according to the illumination difference between the illumination data of the spatially adjacent texel and the illumination data of the first seam texel, for each of the at least one texel, determining a normal angle between the mesh patches corresponding to the spatially adjacent texel and the first seam texel, to obtain a first angle corresponding to the spatially adjacent texel; the first angle being positively correlated with the illumination difference; and
selecting, from the at least one texel, the spatially adjacent texel with the first angle less than or equal to a preset angle.

7. The image processing method according to claim 5 or 6, wherein the selecting, from the at least one texel, the spatially adjacent texel meeting a target condition comprises:

in a case that the at least one texel is screened according to the plane difference between the mesh patch where the spatially adjacent texel is located and the mesh patch where the first seam texel is located, selecting, from the at least one texel, a spatially adjacent texel having a patch coplanarity relationship with the first seam texel; wherein a mesh patch corresponding to the selected spatially adjacent texel and the mesh patch corresponding to the first seam texel are on the same plane.

8. The image processing method according to any one of claims 5 to 7, wherein the selecting, from the at least one texel, the spatially adjacent texel meeting a target condition comprises:

in a case that the at least one texel is screened according to the spatial distance between the spatially adjacent texel and the first seam texel in the three-dimensional virtual scene, selecting, from the at least one texel, the spatially adjacent texel with the spatial distance less than or equal to a preset distance;
wherein the preset distance is less than or equal to a texel radius of the first seam texel.

9. The image processing method according to any one of claims 5 to 8, wherein the selecting, from the at least one texel, the spatially adjacent texel meeting a target condition comprises:

in a case that the at least one texel is screened according to the intersection area between the coverage region of the spatially adjacent texel in the initial three-dimensional mesh model and the coverage region of the first seam texel in the initial three-dimensional mesh model, for each of the at least one texel, determining an angle between a texel vector and a reverse edge normal vector corresponding to the first seam texel, to obtain a second angle corresponding to the spatially adjacent texel; the texel vector being a vector pointing from the first seam texel to the spatially adjacent texel; the reverse edge normal vector being opposite to a direction of an edge normal of the first seam texel; and
selecting, from the at least one texel, the spatially adjacent texel with a minimum second angle;
wherein a size of the second angle is negatively correlated with a size of the intersection area.

10. The method according to any one of claims 1 to 9, wherein the initial three-dimensional mesh model has a corresponding initial illumination map; and the adjusting the first seam texel and the second seam texel in the initial three-dimensional mesh model, to obtain a repaired target three-dimensional mesh model comprises:

determining, from the initial illumination map, a texel mapped to each of the first seam texel and the second seam texel as to-be-repaired seam texel; determining, for each of the to-be-repaired seam texels, a denoising reference region corresponding to the to-be-repaired seam texel in the initial illumination map according to the to-be-repaired seam texel and a seam texel having the seam adjacency relationship with the to-be-repaired seam texel in the initial illumination map;
determining, according to an angle between an edge normal of each reference texel in the denoising reference region and an edge normal of the to-be-repaired seam texel, an illumination contribution parameter corresponding to the reference texel;
denoising and repairing, according to the illumination contribution parameters corresponding to the reference texels and illumination data recorded for the reference texels in the initial illumination map, illumination data recorded for the to-be-repaired seam texel in the initial illumination map, to obtain a target illumination map; and
performing illumination rendering on the initial three-dimensional mesh model according to the target illumination map, to obtain the repaired target three-dimensional mesh model after seam repair on the initial three-dimensional mesh model.

11. The method according to claim 10, wherein the determining a denoising reference region corresponding to the to-be-repaired seam texel in the initial illumination map according to the to-be-repaired seam texel and a seam texel having a seam adjacency relationship with the to-be-repaired seam texel in the initial illumination map comprises:

    determining, along a direction of the edge normal of the to-be-repaired seam texel, a first sampling range of a filter kernel configured for denoising and repairing;
    determining, along a direction of an edge normal of an adjacent seam texel, a second sampling range of the filter kernel; the adjacent seam texel being a seam texel having the seam adjacency relationship with the to-be-repaired seam texel; and
    determining the denoising reference region corresponding to the to-be-repaired seam texel in the initial illumination map according to the first sampling range and the second sampling range.

12. The method according to claim 10 or 11, wherein the denoising and repairing, according to the illumination contribution parameters corresponding to the reference texels and illumination data recorded for the reference texels in the initial illumination map, illumination data recorded for the to-be-repaired seam texel in the initial illumination map, to obtain a target illumination map comprises:

    denoising and repairing, according to the illumination contribution parameters corresponding to the reference texels and the illumination data recorded for the reference texels in the initial illumination map, the illumination data recorded for the to-be-repaired seam texel in the initial illumination map, to obtain denoised illumination data corresponding to the to-be-repaired seam texel;
    blending the denoised illumination data corresponding to the to-be-repaired seam texel with illumination data before denoising, to obtain blended illumination data corresponding to the to-be-repaired seam texel; and
    writing the blended illumination data respectively corresponding to the to-be-repaired seam texels back to the initial illumination map, to obtain the target illumination map.

13. The method according to claim 12, wherein the writing the blended illumination data respectively corresponding to the to-be-repaired seam texels back to the initial illumination map, to obtain the target illumination map comprises:

    writing the blended illumination data respectively corresponding to the to-be-repaired seam texels back to the initial illumination map, to obtain a blended illumination map;
    determining, along a direction of the edge normal of the to-be-repaired seam texel, a secondary texel adjacent to the to-be-repaired seam texel from the blended illumination map; and
    blending illumination data recorded for the secondary texel in the blended illumination map with illumination data recorded for an adjacent seam texel in the blended illumination map, to obtain the target illumination map; the adjacent seam texel being a seam texel having the seam adjacency relationship with the to-be-repaired seam texel.

14. The method according to any one of claims 10 to 13, wherein the denoising and repairing, according to the illumination contribution parameters corresponding to the reference texels and illumination data recorded for the reference texels in the initial illumination map, illumination data recorded for the to-be-repaired seam texel in the initial illumination map, to obtain a target illumination map comprises:

    denoising and repairing, according to the illumination contribution parameters corresponding to the reference texels and the illumination data recorded for the reference texels in the initial illumination map, the illumination data recorded for the to-be-repaired seam texel in the initial illumination map, to obtain a denoised illumination map;
    for each of the to-be-repaired seam texels, determining, from the denoised illumination map, an unmapped texel adjacent to the to-be-repaired seam texel and having no illumination data recorded therefor; and
    filling the unmapped texel with illumination data recorded for an adjacent seam texel in the denoised illumination map, to obtain the target illumination map; the adjacent seam texel being a seam texel having the seam adjacency relationship with the to-be-repaired seam texel.

15. The method according to any one of claims 10 to 14, wherein the determining, according to an angle between an edge normal of each reference texel in the denoising reference region and an edge normal of the to-be-repaired seam texel, an illumination contribution parameter corresponding to the reference texel comprises:

    for each reference texel in the denoising reference region, determining a first normal influence parameter according to the angle between the edge normal of the reference texel and the edge normal of the to-be-repaired seam texel; and determining the illumination contribution parameter corresponding to the reference texel according to at least one of the first normal influence parameter, a second normal influence parameter, a distance influence parameter, and a brightness influence parameter;

wherein the second normal influence parameter is configured for representing a degree of influence of a normal of the to-be-repaired seam texel in the three-dimensional virtual scene and a normal of the reference texel in the three-dimensional virtual scene on the illumination contribution;

the distance influence parameter is configured for representing a degree of influence of a distance between the to-be-repaired seam texel and the reference texel in the three-dimensional virtual scene on the illumination contribution; and

the brightness influence parameter is configured for representing a degree of influence of brightness of the to-be-repaired seam texel and brightness of the reference texel on the illumination contribution.

16. A model seam repairing apparatus, comprising:

a construction module, configured to determine sampled texels obtained by sampling texels of an initial three-dimensional mesh model in a three-dimensional virtual scene, and for each of the sampled texels, constructing a ray emission region, such that a plane in which the ray emission region is located is perpendicular to a normal direction of the sampled texel;

a determination module, configured to obtain at least one ray by determining a ray starting point in the ray emission region and a ray direction opposite to the normal direction of the sampled texel, and determining at least one candidate texel in the initial three-dimensional mesh model that intersects one of the at least one ray;

a judgment module, configured to, if at least one texel of the at least one candidate texel is spatially adjacent to the sampled texel, determine the sampled texel as a first seam texel;

the determination module being further configured to determine, from the at least one texel spatially adjacent to the sampled texel, a second seam texel spatially adjacent to the first seam texel; and

a repair module, configured to adjust the first seam texel and the second seam texel in the initial three-dimensional mesh model, to obtain a repaired target three-dimensional mesh model.

17. A computer device, comprising a memory and a processor, the memory having a computer program stored therein, and the processor executing the computer program to implement operations of the method according to any one of claims 1 to 15.

18. A computer-readable storage medium, having a computer program stored therein, when the computer program is executed by a processor, operations of the method according to any one of claims 1 to 15 being implemented.

19. A computer program product, comprising a computer program, when the computer program is executed by a processor, operations of the method according to any one of claims 1 to 15 being implemented.

FIG. 1

202

Determine sampled texels obtained by sampling texels of an initial three-dimensional mesh model in a three-dimensional virtual scene, and for each of the sampled texels, construct a ray emission region perpendicular to a normal direction of the sampled texel

204

Construct at least one ray by taking a point in the ray emission region as a ray starting point and taking a direction opposite to the normal direction of the sampled texel as a ray direction, and determine texels in the initial three-dimensional mesh model that intersect any one of the at least one ray, to obtain at least one candidate texel

206

Determine, if at least one spatially adjacent texel of the sampled texel exists in the at least one candidate texel, the sampled texel as a first seam texel

208

Determine, from the at least one spatially adjacent texel, a second seam texel having a seam adjacency relationship with the first seam texel

210

Repair the first seam texel and the second seam texel in the initial three-dimensional mesh model, to obtain a target three-dimensional mesh model after seam repair

FIG. 2

FIG. 3

Start to search → Self-occlusion judgment → Ray bundle intersection → Output a seam texel pair

World space adjacency discriminator

Normal angle discriminator

Same-plane discriminator

Spatial distance discriminator

Edge normal discriminator

FIG. 4

Filter kernel: 3×3
The first filtering

FIG. 5

Filter kernel: 3×3
The second filtering

FIG. 6

| ⊿ Model seam repair | |
|---|---|
| Enable a model repair function | ☑ |
| Seam repair level<br>Seam blending level | XXX  ◹<br>XXX  ◹ |
| | △ |

## FIG. 7

| (a) before seam repair | (b) after seam repair |
|---|---|

## FIG. 8

| (a) before seam repair | (b) after seam repair |
|---|---|

## FIG. 9

1002

For each texel in an initial three-dimensional mesh model in a three-dimensional virtual scene, ignore, in the three-dimensional virtual scene, the texel if an occlusion mesh patch exists within a preset range along a normal direction of the texel from the texel

↓

1004

Take texels not ignored in the initial three-dimensional mesh model as sampled texels, and for each sampled texel in the initial three-dimensional mesh model, construct a ray emission region perpendicular to a normal direction of the sampled texel

↓

1006

Construct at least one ray by taking a point in the ray emission region as a ray starting point and taking a direction opposite to the normal direction of the sampled texel as a ray direction, and determine texels in the initial three-dimensional mesh model that intersect any one of the at least one ray, to obtain intersecting texels

↓

1008

For each intersecting texel, take the intersecting texel as a candidate texel if coordinates of the intersecting texel in a planar mesh model are discontinuous with coordinates of the sampled texel in the planar mesh model or the intersecting texel and the sampled texel are located in different initial three-dimensional mesh models

↓

1010

For each candidate texel, determine the candidate texel as a spatially adjacent texel of the sampled texel if a first mesh patch corresponding to the candidate texel and a second mesh patch corresponding to the sampled texel are continuous in the three-dimensional virtual scene

↓

1012

Determine, if at least one spatially adjacent texel of the sampled texel exists in the at least one candidate texel, the sampled texel as a first seam texel

↓

1014

Select, from the at least one spatially adjacent texel according to at least one of an illumination difference between illumination data of the spatially adjacent texel and illumination data of the first seam texel, a plane difference between a mesh patch where the spatially adjacent texel is located and a mesh patch where the first seam texel is located, a spatial distance between the spatially adjacent texel and the first seam texel in the three-dimensional virtual scene, and an intersection area between a coverage region of the spatially adjacent texel in the initial three-dimensional mesh model and a coverage region of the first seam texel in the initial three-dimensional mesh model, the spatially adjacent texel meeting a target condition

↓

1016

Determine the second seam texel from the selected spatially adjacent texel

↓

1018

Determine, from a corresponding initial illumination map of the initial three-dimensional mesh model, a texel mapped to each of the first seam texel and the second seam texel as a to-be-repaired seam texel

1020

Determine, for each to-be-repaired seam texel, a denoising reference region corresponding to the to-be-repaired seam texel in the initial illumination map according to the to-be-repaired seam texel and a seam texel having a seam adjacency relationship with the to-be-repaired seam texel in the initial illumination map

↓

1022

For each reference texel in the denoising reference region, determine a first normal influence parameter according to an angle between an edge normal of the reference texel and an edge normal of the to-be-repaired seam texel

↓

1024

Determine an illumination contribution parameter corresponding to the reference texel according to at least one of the first normal influence parameter, a second normal influence parameter, a distance influence parameter, and a brightness influence parameter

↓

1026

Denoise and repair, according to illumination contribution parameters corresponding to the reference texels and illumination data recorded for the reference texels in the initial illumination map, illumination data recorded for the to-be-repaired seam texel in the initial illumination map, to obtain denoised illumination data corresponding to the to-be-repaired seam texel

↓

1028

Blend the denoised illumination data corresponding to the to-be-repaired seam texel with illumination data before denoising, to obtain blended illumination data corresponding to the to-be-repaired seam texel

↓

1030

Write the blended illumination data respectively corresponding to the to-be-repaired seam texels back to the initial illumination map, to obtain a blended illumination map

↓

1032

Determine, along a direction of the edge normal of the to-be-repaired seam texel, a secondary texel adjacent to the to-be-repaired seam texel from the blended illumination map

↓

1034

Blend illumination data recorded for the secondary texel in the blended illumination map with illumination data recorded for an adjacent seam texel in the blended illumination map, to obtain the target illumination map; the adjacent seam texel being a seam texel having the seam adjacency relationship with the to-be-repaired seam texel

↓

1036

Perform illumination rendering on the initial three-dimensional mesh model according to the target illumination map, to obtain the target three-dimensional mesh model after seam repair on the initial three-dimensional mesh model

## FIG. 10

Model seam repairing apparatus
1100          1102

Construction module

1104

Determination module

1106

Judgment module

1108

Repair module

## FIG. 11

FIG. 12

FIG. 13

## INTERNATIONAL SEARCH REPORT

| International application No. |
|---|
| **PCT/CN2024/083202** |

### A. CLASSIFICATION OF SUBJECT MATTER

G06T 17/20(2006.01)i

According to International Patent Classification (IPC) or to both national classification and IPC

### B. FIELDS SEARCHED

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE, 必应国际, BING INTERNATIONAL: 接缝, 修复, 消除, 纹素, 纹理元素, 采样, 候选, 法线, 射线, 相交, 相邻, 筛选, 选择, 光照贴图, 权重, 降噪, seam, repair, eliminate, texel, texture element, sample, candidate, normal, ray, intersection, neighbor, filter, select, progressive lightmapper, weight, noise reduce

### C. DOCUMENTS CONSIDERED TO BE RELEVANT

| Category* | Citation of document, with indication, where appropriate, of the relevant passages | Relevant to claim No. |
|---|---|---|
| A | CN 111932664 A (TENCENT TECHNOLOGY (SHENZHEN) CO., LTD.) 13 November 2020 (2020-11-13) abstract, description, paragraphs 81-119, and figures 1 and 3 | 1-19 |
| A | CN 111714883 A (NETEASE (HANGZHOU) NETWORK CO., LTD.) 29 September 2020 (2020-09-29) entire document | 1-19 |
| A | CN 112734930 A (CHANGSHA MOURUI NETWORK TECHNOLOGY CO., LTD.) 30 April 2021 (2021-04-30) entire document | 1-19 |
| A | CN 114092625 A (SHANDONG UNIVERSITY) 25 February 2022 (2022-02-25) entire document | 1-19 |
| A | US 11138747 B1 (FACEBOOK TECHNOLOGIES, L.L.C.) 05 October 2021 (2021-10-05) entire document | 1-19 |
| A | US 2018101978 A1 (SONY CORP.) 12 April 2018 (2018-04-12) entire document | 1-19 |

☐ Further documents are listed in the continuation of Box C.  ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 June 2024** | **17 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/083202**

| Patent document cited in search report | | | Publication date (day/month/year) | Patent family member(s) | | | Publication date (day/month/year) |
|---|---|---|---|---|---|---|---|
| CN | 111932664 | A | 13 November 2020 | None | | | |
| CN | 111714883 | A | 29 September 2020 | None | | | |
| CN | 112734930 | A | 30 April 2021 | None | | | |
| CN | 114092625 | A | 25 February 2022 | None | | | |
| US | 11138747 | B1 | 05 October 2021 | US | 11557049 | B1 | 17 January 2023 |
| US | 2018101978 | A1 | 12 April 2018 | WO | 2018067601 | A1 | 12 April 2018 |
| | | | | US | 10453244 | B2 | 22 October 2019 |
| | | | | JP | 2019534511 | A | 28 November 2019 |
| | | | | JP | 6845490 | B2 | 17 March 2021 |

Form PCT/ISA/210 (patent family annex) (July 2022)

**REFERENCES CITED IN THE DESCRIPTION**

**Patent documents cited in the description**

- CN 2023106263156